# EUROPEAN PATENT APPLICATION

(11) **EP 4 579 701 A1**
(43) Date of publication of application: **02.07.2025**
(21) Application number: 24201911.5
(22) Date of filing: 23.09.2024
(51) Int. Cl.: H01G 4/012, H01G 4/228, H01G 4/33, H01G 4/38, H01G 4/30

(54) **UNIT CELL CAPACITORS**

(30) Priority: 28.12.2023 KR 20230195286; 30.04.2024 KR 20240057555
(71) Applicant: Samsung Electro-Mechanics Co., Ltd., Suwon-si, Gyeonggi-do 16674 (KR)
(72) Inventor: Park, Gwangpyo, 16674 Suwon-si, Gyeonggi-do (KR); Park, Jihoon, 16674 Suwon-si, Gyeonggi-do (KR); Choi, A Young, 16674 Suwon-si, Gyeonggi-do (KR); Jeong, Jaeyong, 16674 Suwon-si, Gyeonggi-do (KR); No, Daehee, 16674 Suwon-si, Gyeonggi-do (KR)
(74) Representative: Grünecker Patent- und Rechtsanwälte PartG mbB

(57) **Abstract**

An aspect of the present disclosure provides a capacitor including: a substrate; and a plurality of unit capacitor cells disposed on the substrate, wherein each of the unit capacitor cells includes: a lower electrode; and an upper electrode disposed on the lower electrode, the lower electrode included in a first unit capacitor cell among the unit capacitor cells is connected to the upper electrode included in a second unit capacitor cell among the unit capacitor cells.

## Description

### BACKGROUND

### (a) Field

The present disclosure relates to a capacitor.

### (b) Description of the Related Art

Electronic components used in electronic devices include capacitors, inductors, piezoelectric elements, varistors, or thermistors. Among these ceramic electronic components, multilayer capacitors may be used in various electronic devices due to their small size, high capacity, and easy mounting.

For example, the multilayer capacitor may be used for chip-type capacitors that are mounted in boards of various electronic products to charge or discharge electricity, including imaging such as liquid crystal displays (LCD), plasma display panels (PDP), and organic light- emitting diode (OLED) displays, computers, personal portable terminals, and smartphones.

According to a recent trend of miniaturization and thinning of electronic products, a demand for a multilayer capacitor having high capacity than that of an existing multilayer capacitor is increasing.

### SUMMARY

At least one of the embodiments attempts to provide a capacitor with high capacity by forming internal electrodes at high density in a small space.

However, the problem to be solved by the embodiments of the present disclosure is not limited to the above-described problems, and can be variously extended within the scope of the technical spirit included in the present disclosure.

An aspect of the present disclosure provides a capacitor including: a substrate; and a plurality of unit capacitor cells disposed on the substrate, wherein each of the unit capacitor cells includes: a lower electrode; and an upper electrode disposed on the lower electrode, wherein the lower electrode included in a first unit capacitor cell among the unit capacitor cells is connected to the upper electrode included in a second unit capacitor cell among the unit capacitor cells.

It may further include: a first external electrode; and a second external electrode disposed spaced apart in a longitudinal direction from the first external electrode, the first external electrode may be connected to the lower electrode included in a first connection capacitor cell disposed at a first end of the longitudinal direction among the unit capacitor cells, and the second external electrode may be connected to the upper electrode included in a second connection capacitor cell disposed at a second end of the longitudinal direction among the unit capacitor cells.

It may further include: a first external connection layer configured to connect the first external electrode and the lower electrode included in the first connection capacitor cell; and a second external connection layer configured to connect the second external electrode and the upper electrode included in the second connection capacitor cell.

It may further include: a first pad portion disposed between the first external connection layer and the first external electrode; and a second pad portion disposed between the second external connection layer and the second external electrode.

In addition, the first external electrode and the second external electrode may have a bump structure.

In addition, a plurality of first external electrodes and a plurality of second external electrodes may be provided.

It may further include: a first external electrode; and a second external electrode disposed spaced apart in a longitudinal direction from the first external electrode, the first external electrode may be connected to the lower electrode included in a first connection capacitor cell disposed at a first end of a longitudinal direction among the unit capacitor cells, and the second external electrode may be connected to the lower electrode included in a second connection capacitor cell disposed at a second end of the longitudinal direction among the unit capacitor cells.

It may further include: a first external electrode; and a second external electrode disposed spaced apart in a longitudinal direction from the first external electrode, wherein the first external electrode is connected to the upper electrode included in a first connection capacitor cell disposed at a first end of a longitudinal direction among the unit capacitor cells, and the second external electrode is connected to the upper electrode included in a second connection capacitor cell disposed at a second end of the longitudinal direction among the unit capacitor cells.

It may further include: an internal connection layer configured to have a via structure and to connect the lower electrode included in the first unit capacitor cell and the upper electrode included in the second unit capacitor cell.

It may further include: the lower electrode included in the first unit capacitor cell includes a lower exposed portion without the upper electrode at an upper side, and the upper electrode included in the second unit capacitor cell includes an upper protrusion protruding toward the lower exposed portion, and the internal connection layer may be disposed between the lower exposed portion and the upper protrusion.

In addition, the internal connection layer may include: a first internal connection layer connected to the lower electrode; a second internal connection layer connected to the upper electrode; and a third internal connection layer configured to connect the first internal connection layer and the second internal connection layer.

Additionally, the third internal connecting layer may have a plate-shaped structure.

Another aspect of the present disclosure provides a capacitor including: a substrate; and a plurality of unit capacitor cells disposed on the substrate, wherein each of the unit capacitor cells includes: a lower electrode; and an upper electrode disposed on the lower electrode, wherein the lower electrodes included in each of the unit capacitor cells are separated from each other, the upper electrodes included in each of the unit capacitor cells are separated from each other, and the unit capacitor cells are connected to each other in series.

In addition, a plurality of electrode buried spaces having a groove structure may be formed in the substrate, and a region where the electrode buried spaces are formed is divided into a plurality of unit cell areas, and one of the unit capacitor cells may be disposed on one of the unit cell areas.

In addition, the unit capacitor cells may be connected along a unit cell connection direction that passes through each of the unit cell areas once.

In addition, each of the unit cells areas may include: a plurality of first unit cell areas; and a plurality of second unit cell areas, the unit capacitor cells disposed on the first unit cell areas may be connected along a first unit cell connection direction passing through the first unit cell areas, and the unit capacitor cells disposed on the second unit cell areas may be connected along a second unit cell connection direction passing through the second unit cell areas.

According to at least one of the embodiments, it is possible to provide a capacitor with high capacity by forming internal electrodes at high density in a small space.

### BRIEF DESCRIPTION OF THE DRAWINGS

FIG. 1 illustrates a capacitor according to an embodiment.
FIG. 2 illustrates a longitudinal cross-sectional view taken along a line A-A of FIG. 1.
FIG. 3 illustrates a structure in which unit cell areas are arranged on a substrate.
FIG. 4 illustrates a view of a region B of FIG. 2.
FIG. 5 illustrates a structure of an external electrode.
FIG. 6 illustrates a structure of an external electrode according to another embodiment.
FIG. 7 illustrates a longitudinal cross-sectional view of a capacitor according to another embodiment.
FIG. 8 illustrates a longitudinal cross-sectional view of a capacitor according to another embodiment.
FIG. 9 illustrates a structure of a capacitor according to another embodiment.
FIG. 10 illustrates a top plan view showing positions of an internal connection layer, a pad portion, and an external electrode of the capacitor of FIG. 9.
FIG. 11 illustrates a capacitor according to another embodiment.
FIG. 12 illustrates a longitudinal cross-sectional view taken along a line B-B of FIG. 11.
FIG. 13 illustrates a longitudinal cross-sectional view of a capacitor according to another embodiment.
FIG. 14 illustrates a capacitor according to another embodiment.
FIG. 15 illustrates a capacitor according to another embodiment.
FIG. 16 illustrates a top plan view of a capacitor according to another embodiment.
FIG. 17 illustrates a disposition structure of a unit cell area according to another embodiment.
FIG. 18 illustrates a cross-sectional view of a substrate according to another embodiment.
FIG. 19 illustrates a substrate according to another embodiment.

### DETAILED DESCRIPTION

The present disclosure will be described more fully hereinafter with reference to the accompanying drawings, in which embodiments of the disclosure are shown. As those skilled in the art would realize, the described embodiments may be modified in various different ways, all without departing from the spirit or scope of the present disclosure.

To clearly describe the present invention, parts that are irrelevant to the description are omitted, and like numerals refer to like or similar components throughout the specification.

Further, since sizes and thicknesses of constituent members shown in the accompanying drawings are arbitrarily given for better understanding and ease of description, the present disclosure is not limited to the illustrated sizes and thicknesses. In the drawings, the thicknesses of layers, films, panels, regions, etc., are exaggerated for clarity. In the drawings, for better understanding and ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means disposed on or below the object portion, and does not necessarily mean disposed on the upper side of the object portion based on a gravitational direction.

In addition, unless explicitly described to the contrary, the word "comprise" and variations such as "comprises" or "comprising" will be understood to imply the inclusion of stated elements but not the exclusion of any other elements.

Further, throughout the specification, the phrase "in a plan view" means when an object portion is viewed from above, and the phrase "in a cross-sectional view" means when a cross-section taken by vertically cutting an object portion is viewed from the side.

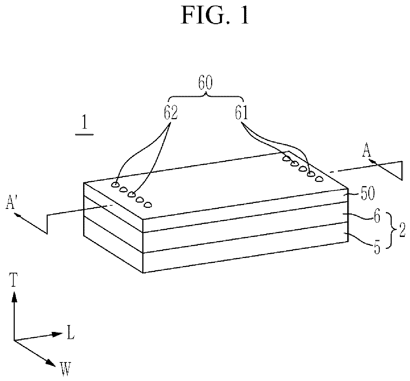

FIG. 1 illustrates a capacitor 1 according to an embodiment,

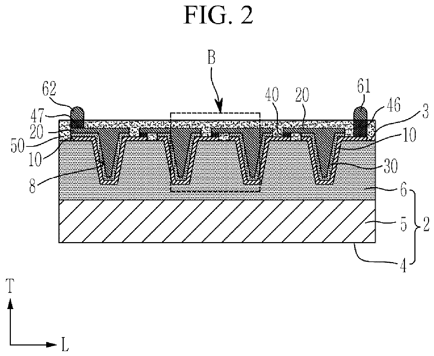

FIG. 2 illustrates a longitudinal cross-sectional view taken along a line A-A of FIG. 1,

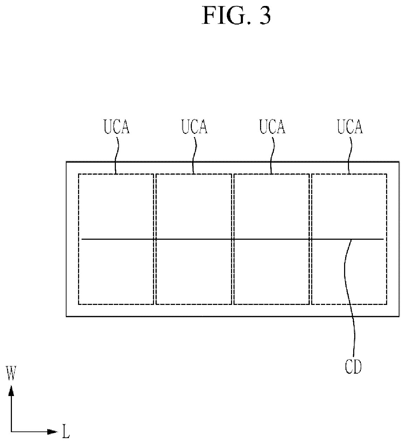

FIG. 3 illustrates a structure in which unit cell areas UCA are arranged on a substrate 2, and

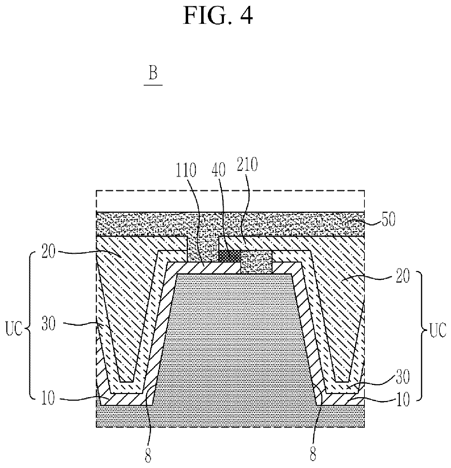

FIG. 4 illustrates a view of a region B of FIG. 2.

Referring to FIG. 1 to FIG. 4, the capacitor 1 according to an embodiment may include a substrate 2, a lower electrode 10, an upper electrode 20, a dielectric layer 30, a first external electrode 61, and a second external electrode 62.

The substrate 2 may include a first surface 3 and a second surface 4 disposed facing to each other. In FIG. 1, the first surface 3 is shown to face upward, and the second surface 4 is shown to face downward. Accordingly, the first surface 3 may be defined as an upper surface, and the second surface 4 may be defined as a lower surface. In addition, a direction in which the first surface 3 and the second surface 4 are spaced apart from each other may be defined as a thickness direction T. Additionally, a direction in which the upper surface 3 is disposed relative to the lower surface 4 may be defined as upward, and a direction in which the lower surface 4 is disposed relative to the upper surface 3 may be defined as downward.

The substrate 2 may have a predetermined width in a width direction W crossing the thickness direction T. The width direction W may be perpendicular to the thickness direction T. The substrate 2 may have a predetermined length in a longitudinal direction L that intersects the thickness direction T and the width direction W. The longitudinal direction L may be perpendicular to the thickness direction T and the width direction W. In this case, the longitudinal direction L is a direction in which a first external electrode 61 and a second external electrode 62, which will be described later, are spaced apart from each other. Additionally, in the longitudinal direction L, a direction in which the first external electrode 61 is disposed is referred to as a first end of the longitudinal direction L, and a direction in which the second external electrode 62 is disposed is referred to as a second end of the longitudinal direction L. A length of the substrate 2 may be greater than a width of the substrate 2. Additionally, the length of the substrate 2 may be equal to the width of the substrate 2 or may be smaller than the width of the substrate 2.

The substrate 2 may include a support layer 5 and a substrate insulating layer 6. The substrate insulating layer 6 may be disposed on the support layer 5. According to some embodiments of the present disclosure, the support layer 5 may include a silicon material or the like. In addition, the substrate insulating layer 6 may be disposed on the support layer 5 to have a predetermined thickness. The substrate insulating layer 6 may include silicon oxide (SiO₂). According to some embodiments of the present disclosure, the substrate insulating layer 6 may be formed to have a predetermined thickness through a deposition process on the support layer 5, which may be a wafer. The deposition process may include chemical vapor deposition (CVD), plasma enhanced CVD, atomic layer deposition, etc, but the present disclosure is not limited thereof.

A plurality of electrode buried spaces 8 are formed in the substrate 2. The electrode buried spaces 8 may have a groove structure recessed from the first surface 3 toward the second surface 4. For example, the electrode buried spaces 8 may have a trench structure that extends from the first surface 3 toward the second surface 4. When the electrode buried spaces 8 have the trench structure, the electrode buried spaces 8 may have a structure extending in the width direction W of the substrate 2. In addition, the electrode buried spaces 8 may be a space in a shape of a pillar 620 recessed from the first surface 3 of the substrate 2 toward the second surface 4. The electrode buried spaces 8 may be disposed in the substrate insulating layer 6. That is, a depth of the electrode buried spaces 8 along the thickness direction T may be less than a thickness of the substrate insulating layer 6.

A region where the electrode buried spaces 8 are formed may be divided into a plurality of unit cell areas UCAs. According to some embodiments of the present disclosure, the region where the electrode buried spaces 8 are formed may be divided into a plurality of unit cell areas UCAs along the longitudinal direction L. That is, the region where the electrode buried spaces 8 are formed along the longitudinal direction L may be divided into at least two unit cell areas UCAs. FIG. 2 and FIG. 3 illustrate a region where the electrode buried spaces 8 are formed along the longitudinal direction L is divided into four unit cell areas UCAs.

One or more electrode buried spaces 8 may be disposed in each unit cell area UCA based on the longitudinal direction L. In FIG. 2, one electrode buried space 8 is disposed in each unit cell area UCA based on the longitudinal direction L. However, this is an example, and two or more electrode buried spaces 8 may be disposed in each unit cell area UCA based on the longitudinal direction L. Additionally, a number of electrode buried spaces 8 disposed in each unit cell area UCA based on the longitudinal direction L may be the same or different.

The capacitor 1 according to some embodiments includes a plurality of unit capacitor cells UCs. That is, the unit capacitor cells UCs are disposed on the substrate 2. The unit capacitor cells UC are respectively disposed on the unit cell areas UCAs. That is, one unit capacitor cell UC is disposed on one unit cell area UCA. Each unit capacitor cell UC may include a lower electrode 10, an upper electrode 20, and a dielectric layer 30, which are disposed on a unit cell area UCA.

A plurality of lower electrodes 10 may be disposed on the substrate 2. The lower electrode 10 may be disposed on the electrode buried space 8. That is, the lower electrode 10 may be disposed on an inner surface of the electrode buried space 8. In addition, when a plurality of electrode buried spaces 8 are disposed in one unit cell area UCA, the lower electrode 10 is disposed in a section between adjacent electrode buried spaces 8 on the first surface 3 of the substrate 2 included in one unit cell area UCA. Accordingly, on one unit cell area UCA, in the lower electrode 10, regions disposed on the inner surface of the electrode buried space 8 may be connected to each other by regions disposed on the first surface 3 of the substrate 2. That is, one lower electrode 10 having regions which are connected to each other may be disposed on one unit cell area UCA.

The lower electrode 10 may not be present between adjacent unit cell areas UCA. In addition, an insulating layer 50 may be disposed between the lower electrodes 10 disposed in adjacent unit cell areas UCA. That is, one lower electrode 10 is disposed on each unit cell area UCA, and the lower electrodes 10 disposed on different unit cell areas UCA are separated from each other through the insulation layer 50.

A plurality of upper electrodes 20 are disposed on the substrate 2. The upper electrodes 20 may be disposed on the lower electrode 10. The upper electrodes 20 may be disposed on the electrode buried space 8. That is, the upper electrodes 20 may be disposed on an inner surface of the electrode buried space 8. In addition, when a plurality of electrode buried spaces 8 are disposed in one unit cell area UCA, the upper electrode 20 is disposed in a section between adjacent electrode buried spaces 8 on the first surface 3 of the substrate 2 included in one unit cell area UCA. Accordingly, on one unit cell area UCA, in the upper electrode 20, regions disposed on the inner surface of the electrode buried space 8 may be connected to each other by regions disposed on the first surface 3 of the substrate 2. That is, one upper electrode 20 having regions which are connected to each other may be disposed on one unit cell area UCA.

The upper electrode 20 may not be disposed between adjacent unit cell areas UCAs. In addition, an insulating layer 50 may be disposed between the upper electrodes 20 disposed in adjacent unit cell areas UCAs. That is, the upper electrodes 20 disposed on different unit cell areas UCAs may be separated from each other through the insulation layer 50.

The upper electrode 20 may not be present on at least a portion of the lower electrode 10. Accordingly, the lower electrode 10 may include a lower exposed portion 110 without the upper electrode 20 thereabove. A unit cell connection direction CD is oriented to pass through each unit cell area UCA once. That is, the unit cell connection direction CD is oriented to pass through each unit capacitor cell UC once. The lower exposed portion 110 may be disposed at a first side of the unit cell connection direction CD on one of the two lower electrodes 10 adjacent along the unit cell connection direction CD. Additionally, in a region where the unit cell areas UCAs adjacent from each other, the lower exposed portion 110 of the lower electrode 10 disposed on each unit cell area UCA may be oriented in a same direction along the unit cell connection direction CD. For example, the lower exposed portion 110 may face a first end of the longitudinal direction L of the substrate 2 along the unit cell connection direction CD. Accordingly, one lower exposed portion 110 may be disposed in a direction in which two adjacent unit cell areas UCAs face each other along the unit cell connection direction CD. In addition, in the lower electrode 10 disposed on the unit cell area UCA disposed at a first end of the length direction L, the lower exposed portion 110 may be disposed in a direction other than a direction facing the adjacent unit cell area UCA. For example, in the lower electrode 10 disposed on the unit cell area UCA disposed at a first end of the length direction L, the lower exposed portion 110 may be disposed in a direction toward the first end of the longitudinal direction L.

The upper electrode 20 may include an upper protrusion 210 that protrudes toward an adjacent unit cell area UCA. The upper protrusion 210 may be disposed at an opposite side of a direction in which the lower exposed portion 110 is disposed along the unit cell connection direction CD. Accordingly, there may be no lower electrode 10 disposed on a same unit cell area UCA below the upper protrusion 210. The upper protrusion 210 may protrude toward the lower exposed portion 110 of the lower electrode 10 disposed on the adjacent unit cell area UCA. The upper protrusion 210 may face the lower exposed portion 110 of the lower electrode 10 disposed on the adjacent unit cell area UCA in the thickness direction T. Accordingly, the upper electrode 20 and lower electrode 10 respectively disposed in adjacent two unit cell areas UCAs may be connected by an internal connection layer 40. The internal connection layer 40 may connect the upper protrusion 210 of the upper electrode 20 and the lower exposed portion 110 of the lower electrode 10 respectively disposed in two adjacent unit cell areas UCAs. Opposite ends of the internal connection layer 40 may respectively directly contact to be connected to the upper protrusion 210 and the lower exposed portion 110 disposed on two unit cell areas UCAs adjacent to each other. According to some embodiments of the present disclosure, the internal connection layer 40 may be a via structure disposed between the upper protrusion 210 and the lower exposed portion 110 respectively position on two adjacent unit cell areas UCAs.

The dielectric layer 30 may be disposed between the lower electrode 10 and the upper electrode 20. The dielectric layer 30 may not be on the lower exposed portion 110.

The first external electrode 61 is connected to the lower electrode 10 on the unit cell area UCA disposed at a first end of the longitudinal direction L. The first external electrode 61 may be disposed on the first surface 3 of the substrate 2. The insulating layer 50 may be disposed on the substrate 2 such that the lower electrode 10, the dielectric layer 30, and the upper electrode 20 may be covered. Additionally, the first external electrode 61 may be disposed on the first surface 3 of the substrate 2 to be at least partially exposed to the outside of the insulating layer 50 on the first surface 3 of the substrate 2. The first external electrode 61 may be connected to the lower exposed portion 110 of the lower electrode 10 disposed at a first end of the longitudinal direction L. The first external electrode 61 and the lower exposed portion 110 of the lower electrode 10 may be connected by a first external connection layer 46. Opposite ends of the first external connection layer 46 may directly contact to the first external electrode 61 and the lower exposed portion 110 of the lower electrode 10, respectively. For example, the first external electrode 61 and the lower exposed portion 110 of the lower electrode 10 disposed at the first end of the longitudinal direction L may face each other in the thickness direction T. The first external connection layer 46 may be a via structure disposed between the first external electrode 61 and the lower exposed portion 110 of the lower electrode 10.

The second external electrode 62 may be disposed to be spaced apart from the first external electrode 61 along the longitudinal direction L. The second external electrode 62 is connected to the upper electrode 20 on the unit cell area UCA disposed at a second end of the longitudinal direction L. The second external electrode 62 may be disposed on the first surface 3 of the substrate 2. The second external electrode 62 may be disposed on the first surface 3 of the substrate 2 to be at least partially exposed to the outside of the insulating layer 50 on the first surface 3 of the substrate 2. The second external electrode 62 may be connected to the upper electrode 20 disposed at an opposite end of the first external electrode 61 along the longitudinal direction L. The second external electrode 62 and the upper electrode 20 may be connected by a second external connection layer 47. Opposite ends of the second external connection layer 47 may directly contact to the second external electrode 62 and the upper electrode 20, respectively. For example, the second external electrode 62 and the upper electrode 20 disposed at a second end of the longitudinal direction L may face each other in the thickness direction T. The second external connection layer 47 may be a via structure disposed between the second external electrode 62 and the upper electrode 20.

The external electrode 60 may have a bump structure. Additionally, a plurality of first external electrodes 61 may be provided, and the first external electrodes 61 may be arranged to be spaced apart from each other along the width direction W. If the first external electrodes 61 are arranged to be spaced apart from each other, when a current flows through the first external electrode 61, magnetic fields generated in each first external electrode 61 are directed in opposite directions between the two first external electrodes 61. Accordingly, magnetic fluxes generated from the first external electrodes 61 cancel each other, and a magnetic field generated around the first external electrode 61 is reduced, reducing equivalent series resistance and equivalent series inductance.

In addition, a plurality of second external electrodes 62 may be provided, and the second external electrodes 62 may be arranged to be spaced apart from each other along the width direction W. Accordingly, when a current flows through the second external electrode 62, the magnetic field formed around the second external electrode 62 may be reduced, reducing equivalent series resistance and equivalent series inductance.

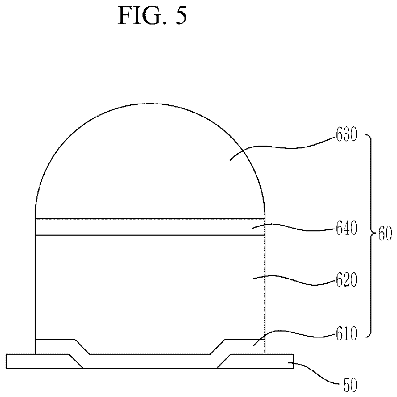

FIG. 5 illustrates a structure of an external electrode 60.

Referring to FIG. 5, the external electrode 60 may include an under bump metallization (UBM) 610, a pillar 620, and a solder 630.

The UBM 610 may be provided such that at least a portion thereof is exposed to the outside of the insulating layer 50. The UBM 610 may be connected to external connection layers 46 and 47. The UBM 610 is provided as a conductive material. The UBM 610 may be made of a metallic material. According to some embodiments of the present disclosure, the UBM 610 may include at least one selected from the group consisting of copper, nickel, a nickel alloy, a copper alloy, and combination thereof. Additionally, the UBM 610 may have a single-layer or multi-layer structure. If the UBM 610 has the multi-layer structure, materials of each layer may be the same or different.

The pillar 620 is disposed on the UBM 610. The pillar 620 may be connected to the UBM 610 by directly contacting to it. The pillar 620 is provided as a conductive material. The pillar 620 may include a metallic material. According to some embodiments of the present disclosure, the filler 620 may include copper or the like.

The solder 630 may be disposed on the filler 620. The solder 630 may be provided as a conductive material. The solder 630 may include a metallic material. According to some embodiments of the present disclosure, the solder 630 may include at least one selected from the group consisting of copper, gold, tin alloy (e.g., SnAg), and combinations thereof.

A junction layer 640 may be disposed between the solder 630 and the pillar 620. The junction layer 640 may be provided as a conductive material. The junction layer 640 may include a metallic material. According to some embodiments of the present disclosure, the junction layer 640 may include nickel or the like. Additionally, the junction layer 640 may be omitted, and the solder 630 may be directly connected to the pillar 620.

The capacitor 1 according to some embodiments may have a structure in which the lower electrode 10 included in one unit capacitor cell UC (i.e., first unit capacitor cell) of two unit capacitor cells UCs adjacent to each other along the unit cell connection direction CD and the upper electrode 20 included in another unit capacitor cell UC (i.e., second unit capacitor cell) may be connected through the internal connection layer 40, and a plurality of unit capacitor cells UCs may be connected to each other. The lower exposed portion 110 may be disposed in a first one of the two unit capacitor cells UCs adjacent to each other along the unit cell connection direction CD, and the upper protrusion 210 may be disposed in a second unit capacitor cell UC. In this case, the lower exposed portion 110 may be disposed to face a first side of the unit cell connection direction CD, and the upper protrusion 210 may be disposed to face a second side of the unit cell connection direction CD. Accordingly, two unit capacitor cells UCs adjacent to each other along the unit cell connection direction CD may be connected to each other through the upper protrusion 210, the lower exposed portion 110, and the internal connection layer 40. That is, a plurality of unit capacitor cells UCs may be connected to each other in series along the unit cell connection direction CD. Additionally, the first external electrode 61 may be connected to the lower electrode 10 of the unit capacitor cell UC disposed at a first end of the longitudinal direction L. In addition, the second external electrode 62 may be connected to the upper electrode 20 of the unit capacitor cell UC disposed at a second end of the longitudinal direction L. The lower electrode 10 connected to the first external electrode 61 may become a first internal electrode. The upper electrode 20 connected to the second external electrode 62 may become a second internal electrode. In addition, the upper electrode 20 and the lower electrode 10, which are disposed between the first internal electrode and the second internal electrode and connected to the internal connection layer 40, may become floating electrodes. Accordingly, a magnitude of the breakdown voltage of the capacitor 1 according to another embodiment may increase, greatly reducing a risk of a breakdown phenomenon occurring.

In addition, the capacitor 1 according to some embodiments may control a number of floating electrodes by adjusting a number of unit capacitor cells UCs connected in series.

Furthermore, in the capacitor 1 according to some embodiments, internal electrodes of the unit capacitor cell UC may be formed at high density in a small space through a deposition process. According to some embodiments of the present disclosure, a unit capacitor cell UC may be formed through chemical vapor deposition (CVD), plasma enhanced chemical vapor deposition (CVD), or atomic layer deposition, but present disclosure is not limited thereof. Accordingly, a high capacitance may be formed in a relatively small area.

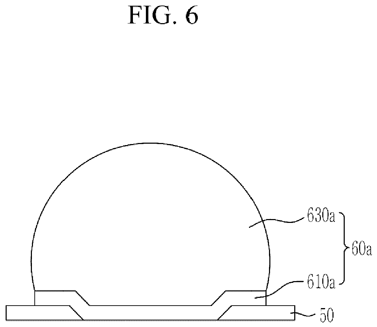

FIG. 6 illustrates a structure of an external electrode 60a according to another embodiment.

Referring to FIG. 6, the external electrode 60a may include a UBM 610a and a solder 630a.

The UBM 610a may be provided such that at least a portion thereof is exposed to the outside of the insulating layer 50. The UBM 610a may be connected to external connection layers 46 and 47. The UBM 610a may include a conductive material. The UBM 610a may be include a metallic material. According to some embodiments of the present disclosure, the UBM 610a may include at least one selected from the group consisting or copper, nickel, a nickel alloy, a copper alloy, and combinations thereof. Additionally, the UBM 610a may have a single-layer or multi-layer structure. If the UBM 610a may have the multi-layer structure, materials of each layer may be the same or different.

The solder 630a is disposed on the UBM 610a. The solder 630a may include a conductive material. The solder 630a may include a metallic material. According to some embodiments of the present disclosure, the solder 630a may include at least one selected from the group consisting of a copper, gold, tin alloy (e.g., SnAg), and combinations thereof.

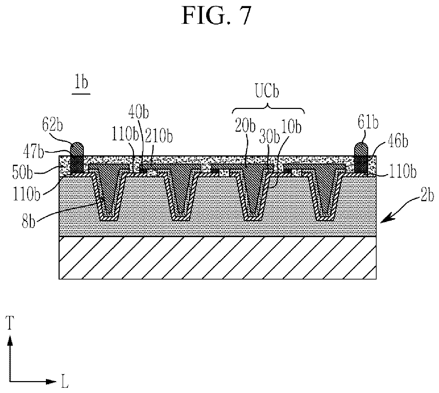

FIG. 7 illustrates a longitudinal cross-sectional view of a capacitor 1b according to another embodiment.

Referring to FIG. 7, the capacitor 1b according to another embodiment may include a substrate 2b, a lower electrode 10b, an upper electrode 20b, a dielectric layer 30b, a first external electrode 61b, and a second external electrode 62b.

An electrode buried space 8b is formed on the substrate 2b. A region where the electrode buried space 8b is formed may be divided into a plurality of unit cell areas.

A structure of the substrate 2b and a structure in which the region where the electrode buried space 8b is formed is divided into a plurality of unit cell areas are the same or similar to the structures described above in FIGS. 1 to 4, so repeated descriptions will be omitted.

The capacitor 1b according to another embodiment includes a plurality of unit capacitor cells UCbs. The unit capacitor cells UCbs are respectively disposed on the unit cell areas. That is, one unit capacitor cell UCb is disposed on one unit cell area. Each unit capacitor cell UCb includes a lower electrode 10b, an upper electrode 20b, and a dielectric layer 30b disposed on a unit cell area. Two unit capacitor cells UCbs adjacent to each other along a unit cell connection direction are connected to each other.

A plurality of lower electrodes 10b are disposed on the substrate 2b. The lower electrode 10b may be disposed on the electrode buried space 8b. That is, the lower electrode 10b may be disposed on an inner surface of the electrode buried space 8b. In addition, when a plurality of electrode buried spaces 8b are disposed in one unit cell area, the lower electrode 10b is disposed in a section between adjacent electrode buried spaces 8b on a first surface of the substrate 2b included in one unit cell area. Accordingly, on one unit cell area in the lower electrode 10b, regions disposed on the inner surface of the electrode buried space 8b may be connected to each other by regions disposed on the first surface of the substrate 2b. That is, one lower electrode 10b having regions which are connected to each other may be disposed on one unit cell area.

The lower electrode 10b may not be between adjacent unit cell areas. In addition, an insulating layer 50b may be disposed between the lower electrodes 10b disposed in adjacent unit cell areas. That is, one lower electrode 10b may be disposed on each unit cell areas, and the lower electrodes 10b disposed on different unit cell areas may be separated from each other through the insulation layer 50b.

A plurality of upper electrodes 20b are disposed on the substrate 2b. The upper electrodes 20b may be disposed on the lower electrode 10b. The upper electrode 20b may be disposed on the electrode buried space 8b. That is, the upper electrode 20b may be disposed on an inner surface of the electrode buried space 8b. In addition, when a plurality of electrode buried spaces 8b are disposed in one unit cell area, the upper electrode 20b is disposed in a section between adjacent electrode buried spaces 8b on a first surface of the substrate 2b included in one unit cell area. Accordingly, on one unit cell area in the upper electrode 20b, regions disposed on the inner surface of the electrode buried space 8b may be connected to each other by regions disposed on the first surface of the substrate 2b. That is, one upper electrode 20b having regions which are connected to each other may be disposed on one unit cell area.

The upper electrode 20b may not be between adjacent unit cell areas. In addition, an insulating layer 50b may be disposed between the upper electrodes 20b disposed in adjacent unit cell areas. That is, the upper electrodes 20b disposed on different unit cell areas are separated from each other through the insulation layer 50b.

The upper electrode 20b may not be present on at least a portion of the lower electrode 10b. Accordingly, the lower electrode 10b may include a lower exposed portion 110b without the upper electrode 20b thereabove. The lower exposed portion 110b may be disposed at a first side of the unit cell connection direction on one of the two lower electrodes 10b adjacent along the unit cell connection direction. Additionally, in a region where the unit cell area is adjacent, the lower exposed portion 110b of the lower electrode 10b disposed on each unit cell area may be oriented in a same direction along the unit cell connection direction. According to some embodiments of the present disclosure, the lower exposed portion 110b may face a first end of the longitudinal direction L of the substrate 2b along the unit cell connection direction. Accordingly, one lower exposed portion 110b may be disposed in a direction in which two adjacent unit cell areas face each other along the unit cell connection direction. In addition, in the lower electrode 10b disposed on the unit cell area disposed at a first end of the length direction L, the lower exposed portion 110b may be disposed in a direction other than a direction facing the adjacent unit cell area. According to some embodiments of the present disclosure, in the lower electrode 10b disposed on the unit cell area disposed at a first end of the length direction L, the lower exposed portion 110b may be disposed in a direction toward the first end of the longitudinal direction L. In addition, in the lower electrode 10b disposed on the unit cell area disposed at a second end of the length direction L, the lower exposed portion 110b may be disposed in a direction other than a direction facing the adjacent unit cell area. According to some embodiments of the present disclosure, in the lower electrode 10b disposed on the unit cell area disposed at a second end of the length direction L, the lower exposed portion 110b may be disposed in a direction toward the second end of the longitudinal direction L. Accordingly, in the lower electrode 10b disposed on the unit cell area disposed at a second end of the length direction L, lower exposed portions 110b may be respectively disposed at opposite sides of the longitudinal direction L.

The upper electrode 20b may include an upper protrusion 210b that protrudes toward an adjacent unit cell area. The upper protrusion 210b may be disposed at an opposite side of a direction in which the lower exposed portion 110b is disposed along the unit cell connection direction. Accordingly, there is no lower electrode 10b disposed on a same unit cell area below the upper protrusion 210b. The upper protrusion 210b may protrude toward the lower exposed portion 110b of the lower electrode 10b disposed on the adjacent unit cell area. The upper protrusion 210b may face the lower exposed portion 110b of the lower electrode 10b disposed on the adjacent unit cell area in the thickness direction T. Accordingly, the upper electrode 20b and lower electrode 10b respectively disposed in adjacent two unit cell areas may be connected by an internal connection layer 40b. The internal connection layer 40b may connect the upper protrusion 210b of the upper electrode 20b and the lower exposed portion 110b of the lower electrode 10b respectively disposed in two adjacent unit cell areas. Opposite ends of the internal connection layer 40b may respectively directly contact to be connected to the upper protrusion 210b and the lower exposed portion 110b disposed on two unit cell areas adjacent to each other. As an example, the internal connection layer 40b may be a via structure disposed between the upper protrusion 210b and the lower exposed portion 110b respectively position on two adjacent unit cell areas.

The dielectric layer 30b may be disposed between the lower electrode 10b and the upper electrode 20b. The dielectric layer 30b may not be on the lower exposed portion 110b.

The first external electrode 61b is connected to the lower electrode 10b on the unit cell area disposed at a first end of the longitudinal direction L. The first external electrode 61b may be disposed on the first surface of the substrate 2b. The insulating layer 50b may be disposed on the substrate 2b such that the lower electrode 10b, the dielectric layer 30b, and the upper electrode 20b are buried. Additionally, the first external electrode 61b may be disposed to be at least partially exposed to the outside of the insulating layer 50b on the first surface of the substrate 2b. The first external electrode 61b may be connected to the lower exposed portion 110b of the lower electrode 10b disposed at a first end of the longitudinal direction L. The first external electrode 61b and the lower exposed portion 110b of the lower electrode 10b may be connected by a first external connection layer 46b. Opposite ends of the first external connection layer 46b may directly contact to be connected to the first external electrode 61b and the lower exposed portion 110b of the lower electrode 10b, respectively. According to some embodiments of the present disclosure, the first external electrode 61b and the lower exposed portion 110b of the lower electrode 10b disposed at the first end of the longitudinal direction L may face each other in the thickness direction T. The first external connection layer 46b may be a via structure disposed between the first external electrode 61b and the lower exposed portion 110b of the lower electrode 10b.

The second external electrode 62b may be disposed to be spaced apart from the first external electrode 61b along the longitudinal direction L. The second external electrode 62b is connected to the lower electrode 10b on the unit cell area disposed at a second end of the longitudinal direction L. The second external electrode 62b may be disposed on the first surface of the substrate 2b. The second external electrode 62b may be disposed to be at least partially exposed to the outside of the insulating layer 50b on the first surface of the substrate 2b. The second external electrode 62b may be connected to the lower electrode 10b disposed at an opposite end of the first external electrode 61b along the longitudinal direction L. That is, the lower electrode 10b disposed on the unit cell area disposed on an opposite side of the first external electrode 61b along the longitudinal direction L may have lower exposed portions 110b disposed at opposite sides. Accordingly, a first one of the two lower exposed portions 110b may face an adjacent unit cell area, and a second one may face an end of the substrate 2b along the longitudinal direction L. The second external electrode 62b and the lower electrode 10b disposed at an opposite end of the first external electrode 61b along the longitudinal direction L may be connected by a second external connection layer 47b. Opposite ends of the second external connection layer 47b may directly contact to be connected to the second external electrode 62b and the lower exposed portion 110b, respectively. According to some embodiments of the present disclosure, the second external electrode 62b and the lower exposed portion 110 of the lower electrode 10b disposed at the second end of the longitudinal direction L may face each other in the thickness direction T. The second external connection layer 47b may be a via structure disposed between the second external electrode 62b and the lower exposed portion 110 of the lower electrode 10b.

The external electrodes 61b and 62b are the same as or similar to the external electrode 60 described above in FIG. 5 or the external electrode 60a described above in FIG. 6, and repeated descriptions will be omitted.

The capacitor 1b according to another embodiment has a structure in which the lower electrode 10b included in one unit capacitor cell UCb (i.e., first unit capacitor cell) of two unit capacitor cells UCbs adjacent to each other along the unit cell connection direction and the upper electrode 20b included in another unit capacitor cell UCb (i.e., second unit capacitor cell) are connected through the internal connection layer 40b, and a plurality of unit capacitor cells UCbs are connected to each other. The lower exposed portion 110b may be disposed in a first one of the two unit capacitor cells UCbs adjacent to each other along the unit cell connection direction, and the upper protrusion 210b may be disposed in a second unit capacitor cell UCb. In this case, the lower exposed portion 110b may be disposed to face a first side of the unit cell connection direction, and the upper protrusion 210b may be disposed to face a second side of the unit cell connection direction. Accordingly, two unit capacitor cells UCbs adjacent to each other along the unit cell connection direction may be connected to each other through the upper protrusion 210b, the lower exposed portion 110b, and the internal connection layer 40b. That is, a plurality of unit capacitor cells UCbs are connected to each other in series along the unit cell connection direction. Additionally, the first external electrode 61b may be connected to the lower electrode 10b of the unit capacitor cell UCb disposed at a first end of the longitudinal direction L. In addition, the second external electrode 62b may be connected to the lower electrode 10b of the unit capacitor cell UCb disposed at a second end of the longitudinal direction L. The lower electrode 10b connected to the first external electrode 61b becomes a first internal electrode. The lower electrode 10b connected to the second external electrode 62b and the upper electrode 20b connected thereto become second internal electrodes. In addition, the upper electrode 20b and the lower electrode 10b, which are disposed between the first internal electrode and the second internal electrode and connected to the internal connection layer 40b, become floating electrodes.

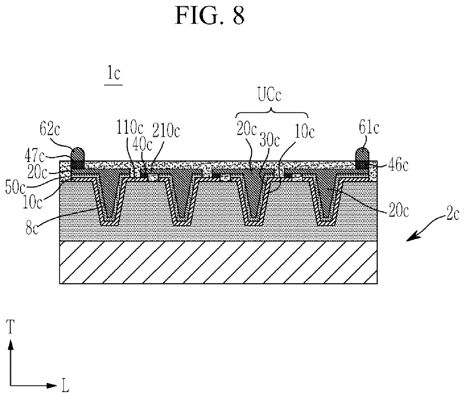

FIG. 8 illustrates a longitudinal cross-sectional view of a capacitor 1c according to another embodiments of the present disclosure.

Referring to FIG. 8, the capacitor 1c according to another embodiments may include a substrate 2c, a lower electrode 10c, an upper electrode 20c, a dielectric layer 30c, a first external electrode 61c, and a second external electrode 62c.

An electrode buried space 8c is formed on the substrate 2c. A region where the electrode buried space 8c is formed may be divided into a plurality of unit cell areas.

A structure of the substrate 2c and a structure in which the region where the electrode buried space 8c is formed is divided into a plurality of unit cell areas are the same or similar to the structures described above in FIGS. 1 to 4, so repeated descriptions will be omitted.

The capacitor 1c according to another embodiment includes a plurality of unit capacitor cells UCcs. The unit capacitor cells UCcs are respectively disposed on the unit cell areas. That is, one unit capacitor cell UCc is disposed on one unit cell area. Each unit capacitor cell UCc includes a lower electrode 10c, an upper electrode 20c, and a dielectric layer 30c disposed on a unit cell area.

A plurality of lower electrodes 10c are disposed on the substrate 2c. The lower electrode 10c may be disposed on the electrode buried space 8c. That is, the lower electrode 10c may be disposed on an inner surface of the electrode buried space 8c. In addition, when a plurality of electrode buried spaces 8c are disposed in one unit cell area, the lower electrode 10c is disposed in a section between adjacent electrode buried spaces 8c on a first surface of the substrate 2c included in one unit cell area. Accordingly, on one unit cell area in the lower electrode 10c, regions disposed on the inner surface of the electrode buried space 8c may be connected to each other by regions disposed on the first surface of the substrate 2c. That is, one lower electrode 10c having regions which are connected to each other may be disposed on one unit cell area.

The lower electrode 10c may not be between adjacent unit cell areas. In addition, an insulating layer 50c may be disposed between the two lower electrodes 10c adjacent from each other, and on an exposed area of the substrate 2c. That is, one lower electrode 10c is disposed on each unit cell area, and the lower electrodes 10c disposed on different unit cell areas are separated from each other through the insulation layer 50c.

A plurality of upper electrodes 20c may be disposed on the lower electrode 10c. The upper electrode 20c may be disposed on the electrode buried space 8c. That is, the upper electrode 20c may be disposed on an inner surface of the electrode buried space 8c. In addition, when a plurality of electrode buried spaces 8c are disposed in one unit cell area, the upper electrode 20c is disposed in a section between adjacent electrode buried spaces 8c on a first surface of the substrate 2c included in one unit cell area. Accordingly, on one unit cell area in the upper electrode 20c, regions disposed on the inner surface of the electrode buried space 8c may be connected to each other by regions disposed on the first surface of the substrate 2c. That is, the upper electrodes 20c adjacent from each other may be connected to each other through the upper electrodes 20c disposed on the first surface of the substrate 2c.

According to some embodiments of the present disclosure, the upper electrode 20c may not be present between adjacent unit cell areas. In addition, an insulating layer 50c may be disposed between the upper electrodes 20c disposed in adjacent unit cell areas. That is, the upper electrodes 20c disposed on different unit cell areas may be separated from each other through the insulation layer 50c.

According to some embodiments of the present disclosure, the upper electrode 20c may not be present on at least a portion of the lower electrode 10c. Accordingly, the lower electrode 10c may include a lower exposed portion 110c without the upper electrode 20c thereabove. The lower exposed portion 110c may be present at a first side of the unit cell connection direction on one of the two lower electrodes 10c adjacent along the unit cell connection direction. Additionally, in an area where the unit cell area is adjacent, the lower exposed portion 110c of the lower electrode 10c present on each unit cell area may be oriented in a same direction along the unit cell connection direction. According to some embodiments of the present disclosure, the lower exposed portion 110c may face a first end of the longitudinal direction L of the substrate 2c along the unit cell connection direction. Accordingly, one lower exposed portion 110c may be present in a direction in which two adjacent unit cell areas face each other along the unit cell connection direction.

The upper electrode 20c may include an upper protrusion 210c that protrudes toward an adjacent unit cell area. The upper protrusion 210c may be disposed at an opposite side of a direction in which the lower exposed portion 110c is disposed along the unit cell connection direction. Accordingly, there is no lower electrode 10c disposed on a same unit cell area below the upper protrusion 210c. In addition, the upper protrusion 210c may extend to the lower exposed portion 110c of the lower electrode 10c disposed on the adjacent unit cell area in the thickness direction Tc. Accordingly, the upper electrode 20c and lower electrode 10c respectively disposed in adjacent two unit cell areas may be connected by an internal connection layer 40c. The internal connection layer 40c may connect the upper protrusion 210c of the upper electrode 20c and the lower exposed portion 110c of the lower electrode 10c respectively disposed in two adjacent unit cell areas. Opposite ends of the internal connection layer 40c may respectively directly contact to be connected to the upper protrusion 210c and the lower exposed portion 110c disposed on two unit cell areas adjacent to each other. According to some embodiments of the present disclosure, the internal connection layer 40c may be a via structure disposed between the upper protrusion 210c and the lower exposed portion 110c respectively position on two adjacent unit cell areas.

The dielectric layer 30c may be disposed between the lower electrode 10c and the upper electrode 20c. The dielectric layer 30c may not be on the lower exposed portion 110c.

The first external electrode 61c is connected to the upper electrode 20c on the unit cell area disposed at a first end of the longitudinal direction L. The first external electrode 61c may be disposed on the first surface of the substrate 2c. The insulating layer 50c may be disposed on the substrate 2c such that the lower electrode 10c, the dielectric layer 30c, and the upper electrode 20c are covered by the insulating layer 50c. Additionally, the first external electrode 61c may be disposed to be at least partially exposed to the outside of the insulating layer 50c on the first surface of the substrate 2c. The first external electrode 61c may be connected to the upper electrode 20c disposed at a first end of the longitudinal direction L. The first external electrode 61c and the upper electrode 20c may be connected through a first external connection layer 46c. One surface of the first external connection layer 46c may directly contact to the first external electrode 61c, and an opposite surface of the second eternal connection layer 46c may directly contact to the upper electrode 20c. According to some embodiments of the present disclosure, the first external electrode 61c and the upper electrode 20c disposed at the first end of the longitudinal direction L may face each other in the thickness direction Tc. The first external connection layer 46c may be a via structure disposed between the first external electrode 61c and the upper electrode 20c.

The second external electrode 62c may be disposed to be spaced apart from the first external electrode 61c along the longitudinal direction L. The second external electrode 62c may be connected to the upper electrode 20c on the unit cell area disposed at a second end of the longitudinal direction L. The second external electrode 62c may be disposed on the first surface of the substrate 2c. The second external electrode 62c may be disposed to be at least partially exposed to the outside of the insulating layer 50c on the first surface of the substrate 2c. The second external electrode 62c may be connected to the upper electrode 20c disposed at an opposite end of the first external electrode 61c along the longitudinal direction L. The second external electrode 62c and the upper electrode 20c may be connected through a second external connection layer 47c. One surface of the second external connection layer 47c may directly contact to the second external electrode 62c, and an opposite surface of the second eternal connection layer 47c may directly contact to the upper electrode 20c. According to some embodiments of the present disclosure, the second external electrode 62c and the upper electrode 20c disposed at the second end of the longitudinal direction L may face each other in the thickness direction T. The second external connection layer 47c may be a via structure disposed between the second external electrode 62c and the upper electrode 20c.

The external electrodes 61c and 62c are the same as or similar to the external electrode 60 described above in FIG. 5 or the external electrode 60a described above in FIG. 6, and repeated descriptions will be omitted.

The capacitor 1c according to another embodiment has a structure in which the lower electrode 10c included in one unit capacitor cell UCc (i.e., first unit capacitor cell) of two unit capacitor cells UCcs adjacent to each other along the unit cell connection direction and the upper electrode 20c included in another unit capacitor cell UCc (i.e., second unit capacitor cell) are connected through the internal connection layer 40c, and a plurality of unit capacitor cells UCcs are connected to each other. The lower exposed portion 110c may be present in a first one of the two unit capacitor cells UCcs adjacent to each other along the unit cell connection direction, and the upper protrusion 210c of the upper electrode 20c may be disposed in a second unit capacitor cell UCc. In this case, the lower exposed portion 110c may be disposed to face a first side of the unit cell connection direction, and the upper protrusion 210c may be disposed to face a second side of the unit cell connection direction. Accordingly, two unit capacitor cells UCcs adjacent to each other along the unit cell connection direction may be connected to each other through the upper protrusion 210c, the lower exposed portion 110c, and the internal connection layer 40c. That is, a plurality of unit capacitor cells UCc are connected to each other in series along the unit cell connection direction. Additionally, the first external electrode 61c may be connected to the upper electrode 20c of the unit capacitor cell UCc disposed at a first end of the longitudinal direction L. In addition, the second external electrode 62c may be connected to the upper electrode 20c of the unit capacitor cell UCc disposed at a second end of the longitudinal direction L. The upper electrode 20c connected to the first external electrode 61c and the lower electrode 10c connected thereto become first internal electrodes. The upper electrode 20c connected to the second external electrode 62c becomes a second internal electrode. In addition, the upper electrode 20c and the lower electrode 10c, which are disposed between the first internal electrode and the second internal electrode and connected to the internal connection layer 40c, become floating electrodes.

According to at least one embodiment among the above-described embodiments, the first external electrode may be connected to the lower electrode or the upper electrode of the unit capacitor cell disposed at the first end of the longitudinal direction L by the first external connection layer, and the second external electrode may be connected to the lower electrode or the upper electrode of the unit capacitor cell disposed at the second end of the longitudinal direction L by the second external connection layer. In this case, a unit capacitor cell including a lower electrode or an upper electrode to which the first external electrode is connected may be referred to as a first connection capacitor cell, and a unit capacitor cell including a lower electrode or an upper electrode to which the second external electrode is connected may be referred to as a second connection capacitor cell.

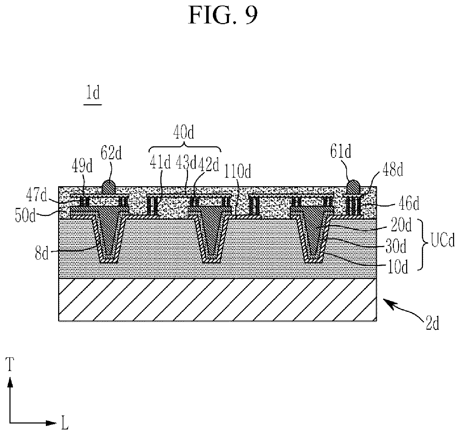

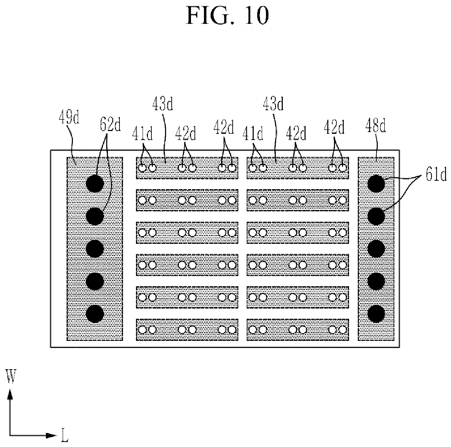

FIG. 9 illustrates a structure of a capacitor 1d according to another embodiments, and FIG. 10 illustrates a top plan view showing positions of an internal connection layer 40d, first and second pad portions 48d and 49d, and first and second external electrodes 61d and 62d of the capacitor 1d illustrated in FIG. 9.

Referring to FIG. 9 and FIG. 10, the capacitor 1d according to another embodiments may include a substrate 2d, a lower electrode 10d, an upper electrode 20d, a dielectric layer 30d, a first external electrode 61d, and a second external electrode 62d.

An electrode buried space 8d is formed on the substrate 2d. A region where the electrode buried space 8d is formed may be divided into a plurality of unit cell areas.

A structure of the substrate 2d and a structure in which the region where the electrode buried space 8d is formed is divided into a plurality of unit cell areas may be the same or similar to the structures described above in FIGS. 1 to 4, so repeated descriptions will be omitted.

The capacitor 1d according to another embodiments includes a plurality of unit capacitor cells UCds. The unit capacitor cells UCds are respectively disposed on the unit cell areas. That is, one unit capacitor cell UCd is disposed on one unit cell area. Each unit capacitor cell UCd may include a lower electrode 10d, an upper electrode 20d, and a dielectric layer 30d disposed on a unit cell area.

A plurality of lower electrodes 10d may be disposed on the substrate 2d. The lower electrode 10d may be disposed on the electrode buried space 8d. That is, the lower electrode 10d may be disposed on an inner surface of the electrode buried space 8d. In addition, when a plurality of electrode buried spaces 8d are disposed in one unit cell area, the lower electrode 10d may be disposed in a section between adjacent electrode buried spaces 8d on a first surface of the substrate 2d included in one unit cell area. Accordingly, on one unit cell area in the lower electrode 10d, regions disposed on the inner surface of the electrode buried space 8d may be connected to each other by regions disposed on the first surface of the substrate 2d. That is, the two adjacent lower electrodes 10d may be connected to each other through the lower electrodes 10d disposed on the first surface of the substrate 2d.

The lower electrode 10d may not be between adjacent unit cell areas. In addition, an insulating layer 50d may be disposed between the lower electrodes 10d disposed in adjacent unit cell areas. That is, one lower electrode 10d is disposed on each unit cell areas, and the lower electrodes 10d disposed on different unit cell areas are separated from each other through the insulation layer 50d.

A plurality of upper electrodes 20d are disposed on the substrate 2d. The upper electrodes 20d may be disposed on the lower electrode 10d. The upper electrode 20d may be disposed on the electrode buried space 8d. That is, the upper electrode 20d may be disposed on an inner surface of the electrode buried space 8d. In addition, when a plurality of electrode buried spaces 8d are disposed in one unit cell area, the upper electrode 20d may be disposed in a section between adjacent electrode buried spaces 8d on a first surface of the substrate 2d included in one unit cell area. Accordingly, on one unit cell area in the upper electrode 20d, regions disposed on the inner surface of the electrode buried space 8d may be connected to each other by regions disposed on the first surface of the substrate 2d. That is, one upper electrode 20d having regions which are connected to each other may be disposed on one unit cell area.

The upper electrode 20d may not be between adjacent unit cell areas. In addition, an insulating layer 50d may be disposed between the upper electrodes 20d disposed in adjacent unit cell areas. That is, the upper electrodes 20d disposed on different unit cell areas are separated from each other through the insulation layer 50d.

The upper electrode 20d may not be present on at least a portion of the lower electrode 10d. Accordingly, the lower electrode 10d may include a lower exposed portion 110d without the upper electrode 20d thereabove. The lower exposed portion 110d may be disposed at a first side of the unit cell connection direction on one of the two lower electrodes 10d adjacent along the unit cell connection direction. Additionally, in an area where the unit cell area is adjacent, the lower exposed portion 110d of the lower electrode 10d disposed on each unit cell area may be oriented in a same direction along the unit cell connection direction. According to some embodiments of the present disclosure, the lower exposed portion 110d may face a first end of the longitudinal direction L of the substrate 2d along the unit cell connection direction. Accordingly, one lower exposed portion 110d may be disposed in a direction in which two adjacent unit cell areas face each other along the unit cell connection direction.

The upper electrode 20d and lower electrode 10d disposed in adjacent two unit cell areas may be connected through an internal connection layer 40d. The internal connection layer 40d may include a first internal connection layer 41d, a second internal connection layer 42d, and a third internal connection layer 43d. The first internal connection layer 41d may be connected to the lower electrode 10d among the upper electrode 20d and the lower electrode 10d disposed in two unit cell areas adjacent to each other. The first internal connection layer 41d may have a via structure, and a lower end thereof may be connected to the lower exposed portion 110d of the lower electrode 10d. The lower surface at an end portion of the first internal connection layer 41d may directly contact the lower exposed portion 110d of the lower electrode 10d. One or a plurality of first internal connection layers 41d may be connected to one lower exposed portion 110d.

The second internal connection layer 42d is connected to the upper electrode 20d among the upper electrode 20d and the lower electrode 10d disposed in two unit cell areas adjacent to each other. The second internal connection layer 42d may have a via structure, and a lower end thereof may be connected to the upper exposed portion 20d. The lower surface at an end of the second internal connection layer 42d may directly contact the upper exposed portion 20d. One or a plurality of second internal connection layers 42d may be connected to one upper electrode 20d.

The third internal connection layer 43d may connect the first internal connection layer 41d connected to the lower electrode 10d of one of the two unit cell areas adjacent to each other and the second internal connection layer 42d connected to the other upper electrode 20d. The third internal connection layer 43d may extend along the unit cell connection direction to be disposed over two unit cell areas adjacent to each other. According to some embodiments of the present disclosure, the third internal connection layer 43d may have a plate-shaped structure.

The upper electrode 20d and lower electrode 10d disposed in adjacent two unit cell areas may be connected through a plurality of internal connection layers 40d arranged in parallel. The internal connection layers 40d may be disposed to be spaced apart in a direction crossing the unit cell connection direction.

The dielectric layer 30d may be disposed between the lower electrode 10d and the upper electrode 20d. The dielectric layer 30d may not be present on the lower exposed portion 110d.

The first external electrode 61d may be connected to the lower electrode 10d on the unit cell area disposed at a first end of the longitudinal direction L. The first external electrode 61d may be disposed on the first surface of the substrate 2d. The insulating layer 50d may be disposed on the substrate 2d such that the lower electrode 10d, the dielectric layer 30d, and the upper electrode 20d may be covered. Additionally, the first external electrode 61d may be disposed to be at least partially exposed to the outside of the insulating layer 50d on the first surface of the substrate 2d. The first external electrode 61d may be connected to the lower exposed portion 110d of the lower electrode 10d disposed at a first end of the longitudinal direction L. The first external electrode 61d and the lower exposed portion 110d of the lower electrode 10d may be connected through a first external connection layer 46d. According to some embodiments of the present disclosure, the first external electrode 61d and the lower exposed portion 110d of the lower electrode 10d disposed at the first end of the longitudinal direction L may face each other in the thickness direction T. The first external connection layer 46d may be a via structure disposed between the first external electrode 61d and the lower exposed portion 110d of the lower electrode 10d. The lower end of the first external connection layer 46d may directly contact and be connected to the lower exposed portion 110d of the lower electrode 10d. The first external connection layer 46d may be connected to the first external electrode 61d through the first pad portion 48d. That is, an upper end of the first external connection layer 46d may be connected to the first pad portion 48d, and the first external electrode 61d may be connected to the first pad portion 48d. The first pad portion 48d may have a plate-shaped structure. Accordingly, when a plurality of first external electrodes 61d are provided, the first external electrodes 61d may be connected to each other by the first pad portion 48d. One or a plurality of first external connection layers 46d may be connected to one lower exposed portion 110d.

The second external electrode 62d may be disposed to be spaced apart from the first external electrode 61d along the longitudinal direction L. The second external electrode 62d may be connected to the upper electrode 20d on the unit cell area disposed at a second end of the longitudinal direction L. The second external electrode 62d may be disposed on the first surface of the substrate 2d. The second external electrode 62d may be disposed to be at least partially exposed to the outside of the insulating layer 50d on the first surface of the substrate 2d. The second external electrode 62d may be connected to the upper electrode 20d disposed at an opposite end of the first external electrode 61d along the longitudinal direction L. The second external electrode 62d and the upper electrode 20d may be connected through a second external connection layer 47d. According to some embodiments of the present disclosure, the second external electrode 62d and the upper electrode 20d disposed at a second end of the longitudinal direction L may face each other in the thickness direction T. The second external connection layer 47d may be a via structure disposed between the second external electrode 62d and the upper electrode 20d. The lower end of the second external connection layer 47d may directly contact to the upper exposed portion 20d. The second external connection layer 47d may be connected to the second external electrode 62d through the second pad portion 49d. That is, an upper end of the second external connection layer 47d may be connected to the second pad portion 49d, and the second external electrode 62d may be connected to the second pad portion 49d. The second pad portion 49d may have a plate-shaped structure. Accordingly, when a plurality of second external electrodes 62d are provided, the second external electrodes 62d may be connected to each other through the second pad portion 49d. One or a plurality of second external connection layers 47d may be connected to one upper electrode 20d.

The external electrodes 61d and 62d may be the same as or similar to the external electrode 60 described above in FIG. 5 or the external electrode 60a described above in FIG. 6, and repeated descriptions will be omitted.

The capacitor 1d according to another embodiments has a structure in which the lower electrode 10d included in one unit capacitor cell UCd (i.e., first unit capacitor cell) of two unit capacitor cells UCds adjacent to each other along the unit cell connection direction and the upper electrode 20d included in another unit capacitor cell UCd (i.e., second unit capacitor cell) are connected through the internal connection layer 40d, and a plurality of unit capacitor cells UCds are connected to each other. The lower exposed portion 110d may be disposed in one of two unit capacitor cells UCds adjacent to each other along the unit cell connection direction. In this case, the lower exposed portion 110d may be disposed to face a first side of the unit cell connection direction. Accordingly, two unit capacitor cells UCds adjacent to each other along the unit cell connection direction may be connected to each other through the lower exposed portion 110d, the internal connection layer 40d, and the upper electrode 20d. That is, a plurality of unit capacitor cells UCds are connected to each other in series along the unit cell connection direction. Additionally, the first external electrode 61d may be connected to the lower electrode 10d of the unit capacitor cell UCd disposed at a first end of the longitudinal direction L. In addition, the second external electrode 62d may be connected to the upper electrode 20d of the unit capacitor cell UCd disposed at a second end of the longitudinal direction L. The lower electrode 10d connected to the first external electrode 61d becomes a first internal electrode. The upper electrode 20d connected to the second external electrode 62d becomes a second internal electrode. In addition, the upper electrode 20d and the lower electrode 10d, which are disposed between the first internal electrode and the second internal electrode and connected to the internal connection layer 40d, become floating electrodes.

Additionally, similar to what is described above in FIG. 7, the first external electrode 61d may be connected to the lower electrode 10d of the unit capacitor cell UCd disposed at a first end of the longitudinal direction L. In addition, the second external electrode 62d may be connected to the lower electrode 10d of the unit capacitor cell UCd disposed at a second end of the longitudinal direction L. The lower electrode 10d connected to the first external electrode 61d becomes a first internal electrode. The lower electrode 10d connected to the second external electrode 62d and the upper electrode 20d connected thereto become second internal electrodes. In addition, the upper electrode 20d and the lower electrode 10d, which are disposed between the first internal electrode and the second internal electrode and connected to the internal connection layer 40d, become floating electrodes. To this end, the lower electrode 10d of the unit capacitor cell UCd disposed at a second end of the longitudinal direction L may have lower exposed portions 110d disposed at opposite sides. Accordingly, a first one of the two lower exposed portions 110d may face an adjacent unit cell area, and a second one may face an end of the substrate 2d along the longitudinal direction L.

Additionally, similar to what is described above in FIG. 8, the first external electrode 61d may be connected to the upper electrode 20d of the unit capacitor cell UCd disposed at a first end of the longitudinal direction L. In addition, the second external electrode 62d may be connected to the upper electrode 20d of the unit capacitor cell UCd disposed at a second end of the longitudinal direction L. The upper electrode 20d connected to the first external electrode 61d and the lower electrode 10d connected thereto become first internal electrodes. The upper electrode 20d connected to the second external electrode 62d becomes a second internal electrode. In addition, the upper electrode 20d and the lower electrode 10d, which are disposed between the first internal electrode and the second internal electrode and connected to the internal connection layer 40d, become floating electrodes.

In this case, the unit capacitor cell UCd disposed at a first end of the longitudinal direction L and including the lower electrode 10d or the upper electrode 30d to which the first external electrode 61d is connected may be referred to as a first connection capacitor cell. In addition, the unit capacitor cell UCd disposed at a second end of the longitudinal direction L and including the lower electrode 10d or the upper electrode 30d to which the second external electrode 61d is connected may be referred to as a second connection capacitor cell.

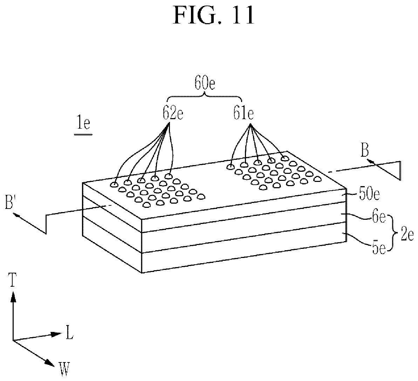

FIG. 11 illustrates a capacitor 1e according to another embodiments, and

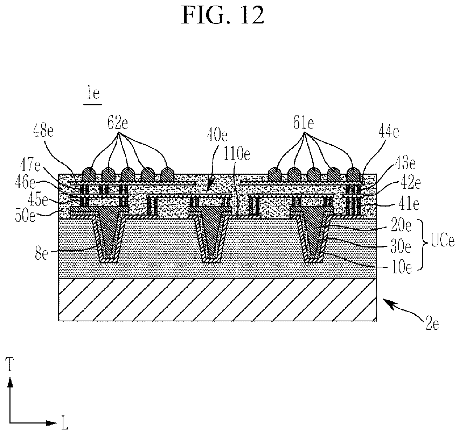

FIG. 12 illustrates a longitudinal cross-sectional view taken along a line B-B of FIG. 11.

Referring to FIG. 11 and FIG. 12, the capacitor 1e according to another embodiments may include a substrate 2e, a lower electrode 10e, an upper electrode 20e, a dielectric layer 30e, a first external electrode 61e, and a second external electrode 62e.

The substrate 2e may include a support layer 5e and a substrate insulating layer 6e. An electrode buried space 8e is formed on the substrate 2e. A region where the electrode buried space 8e is formed may be divided into a plurality of unit cell areas.

A structure of the substrate 2e and a structure in which the region where the electrode buried space 8e is formed is divided into a plurality of unit cell areas are the same or similar to the structures described above in FIGS. 1 to 4, so repeated descriptions will be omitted.

The capacitor 1e according to another embodiments includes a plurality of unit capacitor cells UCes. The unit capacitor cells UCes are respectively disposed on the unit cell areas. That is, one unit capacitor cell UCe is disposed on one unit cell area. Each unit capacitor cell UCe includes a lower electrode 10e, an upper electrode 20e, and a dielectric layer 30e disposed on a unit cell area.

A structure of the lower electrode 10e, the upper electrode 20e, the dielectric layer 30e, and the insulating layer 50e may be the same as or similar to the structure of the lower electrode 10d, the upper electrode 20d, the dielectric layer 30d, and the insulating layer 50d of the capacitor 1d described above in FIGS. 9 and 10, and thus repeated descriptions will be omitted.

The upper electrode 20e and lower electrode 10e respectively disposed in adjacent two unit cell areas may be connected by an internal connection layer 40e. A structure of the internal connection layer 40e is the same as or similar to the structure of the internal connection layer 40d of the capacitor 1d described above in FIGS. 9 and 10, repeated descriptions will be omitted.

The first external electrode 61e is connected to the lower electrode 10e on the unit cell area disposed at a first end of the longitudinal direction L. The first external electrode 61e may be disposed on the first surface of the substrate 2e. The insulating layer 50e may be disposed on the substrate 2e such that the lower electrode 10e, the dielectric layer 30e, and the upper electrode 20e may be covered. Additionally, the first external electrode 61e may be disposed to be at least partially exposed to the outside of the insulating layer 50e on the first surface of the substrate 2e. The first external electrode 61e may be connected to the lower exposed portion 110e of the lower electrode 10e disposed at a first end of the longitudinal direction L. The first external electrode 61e may be connected to the lower exposed portion 110e of the lower electrode 10e through a first external connection layer 41e, a first pad portion 42e, a first expansion connection layer 43e, and a first expansion pad portion 44e.

The first external connection layer 41e may have a via structure, and a lower end thereof may directly contact to the lower exposed portion 110e of the lower electrode 10e. One or a plurality of first external connection layers 41e may be connected to one lower exposed portion 110e. The first pad portion 42e may directly contact to an upper end of the first external connection layer 41e. The first pad portion 42e may have a plate-shaped structure. The first external connection layer 43e may have a via structure, and a lower end thereof may directly contact and be connected to the first pad portion 42e. One or a plurality of first expansion connection layers 43e may be connected to the first pad portion 42e. The first expansion pad portion 44e may directly contact and be connected to an upper end of the first expansion connection layer 43e. The first expansion pad portion 44e may have a plate-shaped structure. At least a portion of the first expansion pad portion 44e may face the internal connection layer 40e in the thickness direction T. An area of the first expansion pad portion 44e may be larger than that of one unit cell area. That is, the area of the first expansion pad portion 44e may be larger than that of one unit capacitor cell UCe. The first external electrode 61e may be connected to the first expansion pad portion 44e. A plurality of first external electrodes 61e may be provided, and the first external electrodes 61e may be arranged to be spaced apart from each other along the width direction W. Additionally, the first external electrodes 61e may be arranged to be spaced apart from each other along the longitudinal direction L.

The second external electrode 62e may be connected to the upper electrode 20e on the unit cell area disposed at a second end of the longitudinal direction L. The second external electrode 62e may be disposed on the first surface of the substrate 2e. The second external electrode 62e may be disposed to be at least partially exposed to the outside of the insulating layer 50e on the first surface of the substrate 2e. The second external electrode 62e may be connected to the upper electrode 20e disposed at a second end of the longitudinal direction L. The second external electrode 62e may be connected to the upper electrode 20e by the second external connection layer 45e, the second pad portion 46e, the second expansion connection layer 47e, and the second expansion pad portion 48e.

The second external connection layer 45e may have a via structure, and a lower end thereof may directly contact and be connected to the upper exposed portion 20e. One or a plurality of second external connection layers 45e may be connected to one upper electrode 20e. The second pad portion 46e may directly contact and be connected to an upper end of the second external connection layer 45e. The second pad portion 46e may have a plate-shaped structure. The second external connection layer 47e may have a via structure, and a lower end thereof may directly contact and be connected to the second pad portion 46e. One or a plurality of second expansion connection layers 47e may be connected to the second pad portion 46e. The second expansion pad portion 48e may directly contact and be connected to an upper end of the second expansion connection layer 47e. The second expansion pad portion 48e may have a plate-shaped structure. At least a portion of the second expansion pad portion 48e may face the internal connection layer 40e in the thickness direction T. An area of the second expansion pad portion 48e may be larger than that of one unit cell area. That is, the area of the second expansion pad portion 48e may be larger than that of one unit capacitor cell UCe. The second external electrode 62e may be connected to the second expansion pad portion 48e. A plurality of second external electrodes 62e may be provided, and the second external electrodes 62e may be arranged to be spaced apart from each other along the width direction W. Additionally, the second external electrodes 62e may be arranged to be spaced apart from each other along the longitudinal direction L.

The external electrodes 61e and 62e are the same as or similar to the external electrode 60 described above in FIG. 5 or the external electrode 60a described above in FIG. 6, and repeated descriptions will be omitted.

The capacitor 1e according to another embodiment has a structure in which the lower electrode 10e included in one unit capacitor cell UCe (i.e., first unit capacitor cell) of two unit capacitor cells UCe adjacent to each other along the unit cell connection direction and the upper electrode 20e included in another unit capacitor cell UCe (i.e., second unit capacitor cell) are connected through the internal connection layer 40e, and a plurality of unit capacitor cells UCe are connected to each other. The lower exposed portion 110e may be disposed in one of two unit capacitor cells UCe adjacent to each other along the unit cell connection direction. In this case, the lower exposed portion 110e may be disposed to face a first side of the unit cell connection direction. Accordingly, two unit capacitor cells UCe adjacent to each other along the unit cell connection direction may be connected to each other through the lower exposed portion 110e, the internal connection layer 40e, and the upper electrode 20e. That is, a plurality of unit capacitor cells UCe are connected to each other in series along the unit cell connection direction. Additionally, the first external electrode 61e may be connected to the lower electrode 10e of the unit capacitor cell UCe disposed at a first end of the longitudinal direction L. In addition, the second external electrode 62e may be connected to the upper electrode 20e of the unit capacitor cell UCe disposed at a second end of the longitudinal direction L. The lower electrode 10e connected to the first external electrode 61e becomes a first internal electrode. The upper electrode 20e connected to the second external electrode 62e becomes a second internal electrode. In addition, the upper electrode 20e and the lower electrode 10e, which are disposed between the first internal electrode and the second internal electrode and connected to the internal connection layer 40e, become floating electrodes.

Additionally, similar to what was described above in FIG. 7, the first external electrode 61e may be connected to the lower electrode 10e of the unit capacitor cell UCe disposed at a first end of the longitudinal direction L. In addition, the second external electrode 62e may be connected to the lower electrode 10e of the unit capacitor cell UCe disposed at a second end of the longitudinal direction L. The lower electrode 10e connected to the first external electrode 61e becomes a first internal electrode. The lower electrode 10e connected to the second external electrode 62e and the upper electrode 20e connected thereto become second internal electrodes. In addition, the upper electrode 20e and the lower electrode 10e, which are disposed between the first internal electrode and the second internal electrode and connected to the internal connection layer 40e, become floating electrodes. To this end, the lower electrode 10e of the unit capacitor cell UCe disposed at a second end of the longitudinal direction L may have lower exposed portions 110e disposed at opposite sides. Accordingly, a first one of the two lower exposed portions 110e may face an adjacent unit cell area, and a second one may face an end of the substrate 2e along the longitudinal direction L.

Additionally, similar to what was described above in FIG. 8, the first external electrode 61e may be connected to the upper electrode 20e of the unit capacitor cell UCe disposed at a first end of the longitudinal direction L. In addition, the second external electrode 62e may be connected to the upper electrode 20e of the unit capacitor cell UCe disposed at a second end of the longitudinal direction L. The upper electrode 20e connected to the first external electrode 61e and the lower electrode 10e connected thereto become first internal electrodes. The upper electrode 20e connected to the second external electrode 62e becomes a second internal electrode. In addition, the upper electrode 20e and the lower electrode 10e, which are disposed between the first internal electrode and the second internal electrode and connected to the internal connection layer 40e, become floating electrodes.

In this case, the unit capacitor cell UCe disposed at a first end of the longitudinal direction L and including the lower electrode 10e or the upper electrode 30e to which the first external electrode 61e is connected may be referred to as a first connection capacitor cell. In addition, the unit capacitor cell UCe disposed at a second end of the longitudinal direction L and including the lower electrode 10e or the upper electrode 30e to which the second external electrode 61e is connected may be referred to as a second connection capacitor cell.

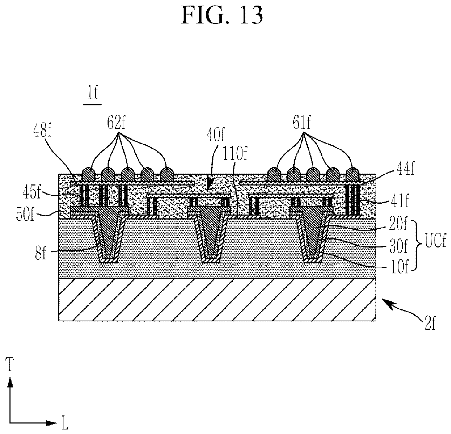

FIG. 13 illustrates a longitudinal cross-sectional view of a capacitor 1f according to another embodiment.

Referring to FIG. 13, the capacitor 1f according to another embodiments may include a substrate 2f, a lower electrode 10f, an upper electrode 20f, a dielectric layer 30f, a first external electrode 61f, and a second external electrode 62f.

An electrode buried space 8f is formed on the substrate 2f. A region where the electrode buried space 8f is formed may be divided into a plurality of unit cell areas.

A structure of the substrate 2f and a structure in which the region where the electrode buried space 8f is formed is divided into a plurality of unit cell areas may be the same or similar to the structures described above in FIGS. 1 to 4, so repeated descriptions will be omitted.

The capacitor 1f according to another embodiments includes a plurality of unit capacitor cells UCfs. The unit capacitor cells UCfs are respectively disposed on the unit cell areas. That is, one unit capacitor cell UCf is disposed on one unit cell area. Each unit capacitor cell UCf includes a lower electrode 10f, an upper electrode 20f, and a dielectric layer 30f disposed on a unit cell area.

A structure of the lower electrode 10f, the upper electrode 20f, the dielectric layer 30f, and the insulating layer 50f may be the same as or similar to the structure of the lower electrode 10d, the upper electrode 20d, the dielectric layer 30d, and the insulating layer 50d of the capacitor 1d described above in FIGS. 9 and 10, and thus repeated descriptions will be omitted.

The upper electrode 20f and lower electrode 10f respectively disposed in adjacent two unit cell areas may be connected through an internal connection layer 40f. A structure of the internal connection layer 40g may be the same as or similar to the structure of the internal connection layer 40d of the capacitor 1d described above in FIGS. 9 and 10, repeated descriptions will be omitted.

The first external electrode 61f is connected to the lower electrode 10f on the unit cell area disposed at a first end of the longitudinal direction L. The first external electrode 61f may be disposed on the first surface of the substrate 2f. The insulating layer 50f may be disposed on the substrate 2f such that the lower electrode 10f, the dielectric layer 30f, and the upper electrode 20f may be covered with the insulating layer 50f. Additionally, the first external electrode 61f may be disposed to be at least partially exposed to the outside of the insulating layer 50f on the first surface of the substrate 2f. The first external electrode 61f may be connected to the lower exposed portion 110f of the lower electrode 10f disposed at a first end of the longitudinal direction L. The first external electrode 61f may be connected to the lower exposed portion 110f of the lower electrode 10f by the first external connection layer 41f and the first pad portion 44f.

The first external connection layer 41f may have a via structure, and a lower end thereof may directly contact to the lower exposed portion 110f of the lower electrode 10f. One or a plurality of first external connection layers 41f may be connected to one lower exposed portion 110f. The first pad portion 44f may directly contact to an upper end of the first external connection layer 41f. The first pad portion 44f may have a plate-shaped structure. The pad portion 40f may extend to the longitudinal direction L such that at least a portion of a lower surface of the first pad portion 44f may face an upper surface of the internal connection layer 40f in the thickness direction T. A surface area of the first pad portion 44f may be larger than that of one unit cell area. That is, the surface area of the first pad portion 44f may be larger than that of one unit capacitor cell UCf. The first external electrode 61f may be connected to first pad portion 44f. A plurality of first external electrodes 61f may be provided, and the first external electrodes 61f may be arranged to be spaced apart from each other along the width direction W. Additionally, the first external electrodes 61f may be arranged to be spaced apart from each other along the longitudinal direction L.

The second external electrode 62f is connected to the upper electrode 20f on the unit cell area disposed at a second end of the longitudinal direction L. The second external electrode 62f may be disposed on the first surface of the substrate 2f. The second external electrode 62f may be disposed to be at least partially exposed to the outside of the insulating layer 50f on the first surface of the substrate 2f. The second external electrode 62f may be connected to the upper electrode 20f disposed at a second end of the longitudinal direction L. The second external electrode 62f may be connected to the upper electrode 20f by a second external connection layer 45f and a second pad portion 48f.

The second external connection layer 45f may have a via structure, and a lower end thereof may directly contact to the upper exposed portion 20f. One or a plurality of second external connection layers 45f may be connected to one upper electrode 20f. The second pad portion 48f may directly contact and be connected to an upper end of the second external connection layer 45f. The second pad portion 48f may have a plate-shaped structure. The second pad portion 48f may extend to the longitudinal direction L such that at least a portion of a lower surface of the second pad portion 48f may face an upper surface of the internal connection layer 40f in the thickness direction T. An area of the second pad portion 48f may be larger than that of one unit cell area. That is, the area of the second pad portion 48f may be larger than that of one unit capacitor cell UCf. The second external electrode 62f may be connected to the second pad portion 48f. A plurality of second external electrodes 62f may be provided, and the second external electrodes 62f may be arranged to be spaced apart from each other along the width direction W. Additionally, the second external electrodes 62f may be arranged to be spaced apart from each other along the longitudinal direction L.

The external electrodes 61f and 62f may be the same as or similar to the external electrode 60 described above in FIG. 5 or the external electrode 60a described above in FIG. 6, and repeated descriptions will be omitted.

The capacitor 1f according to another embodiments may have a structure in which the lower electrode 10f included in one unit capacitor cell UCf (i.e., first unit capacitor cell) of two unit capacitor cells UCf adjacent to each other along the unit cell connection direction and the upper electrode 20f included in another unit capacitor cell UCf (i.e., second unit capacitor cell) may be connected through the internal connection layer 40f, and a plurality of unit capacitor cells UCf may be connected to each other. The lower exposed portion 110f may be disposed in one of two unit capacitor cells UCfs adjacent to each other along the unit cell connection direction. In this case, the lower exposed portion 110f may be disposed to face a first side of the unit cell connection direction. Accordingly, two unit capacitor cells UCfs adjacent to each other along the unit cell connection direction may be connected to each other through the lower exposed portion 110f, the internal connection layer 40f, and the upper electrode 20f. That is, a plurality of unit capacitor cells UCfs are connected to each other in series along the unit cell connection direction. Additionally, the first external electrode 61f may be connected to the lower electrode 10f of the unit capacitor cell UCf disposed at a first end of the longitudinal direction L. In addition, the second external electrode 62f may be connected to the upper electrode 20f of the unit capacitor cell UCf disposed at a second end of the longitudinal direction L. The lower electrode 10f connected to the first external electrode 61f may become a first internal electrode. The upper electrode 20f connected to the second external electrode 62f becomes a second internal electrode. In addition, the upper electrode 20f and the lower electrode 10f, which are disposed between the first internal electrode and the second internal electrode and connected to the internal connection layer 40f, become floating electrodes.

Additionally, similar to what is described above in FIG. 7, the first external electrode 61f may be connected to the lower electrode 10f of the unit capacitor cell UCf disposed at a first end of the longitudinal direction L. In addition, the second external electrode 62f may be connected to the lower electrode 10f of the unit capacitor cell UCf disposed at a second end of the longitudinal direction L. The lower electrode 10f connected to the first external electrode 61f becomes a first internal electrode. The lower electrode 10f connected to the second external electrode 62f and the upper electrode 20f connected thereto become second internal electrodes. In addition, the upper electrode 20f and the lower electrode 10f, which are disposed between the first internal electrode and the second internal electrode and connected to the internal connection layer 40f, become floating electrodes. To this end, the lower electrode 10f of the unit capacitor cell UCf disposed at a second end of the longitudinal direction L may have lower exposed portions 110f disposed at opposite sides. Accordingly, a first one of the two lower exposed portions 110f may face an adjacent unit cell area, and a second one may face an end of the substrate 2f along the longitudinal direction L.

Additionally, similar to what is described above in FIG. 8, the first external electrode 61f may be connected to the upper electrode 20f of the unit capacitor cell UCf disposed at a first end of the longitudinal direction L. In addition, the second external electrode 62f may be connected to the upper electrode 20f of the unit capacitor cell UCf disposed at a second end of the longitudinal direction L. The upper electrode 20f connected to the first external electrode 61f and the lower electrode 10f connected thereto become first internal electrodes. The upper electrode 20f connected to the second external electrode 62f becomes a second internal electrode. In addition, the upper electrode 20f and the lower electrode 10f, which are disposed between the first internal electrode and the second internal electrode and connected to the internal connection layer 40f, become floating electrodes.

In this case, the unit capacitor cell UCf disposed at a first end of the longitudinal direction L and including the lower electrode 10f or the upper electrode 30f to which the first external electrode 61f is connected may be referred to as a first connection capacitor cell. In addition, the unit capacitor cell UCf disposed at a second end of the longitudinal direction L and including the lower electrode 10f or the upper electrode 30f to which the second external electrode 61f is connected may be referred to as a second connection capacitor cell.

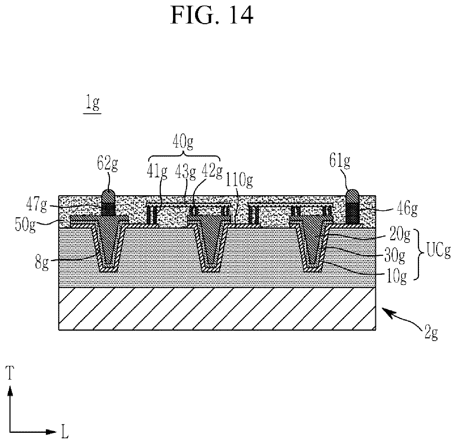

FIG. 14 illustrates a capacitor 1g according to another embodiments.

Referring to FIG. 14, the capacitor 1g according to another embodiments may include a substrate 2g, a lower electrode 10g, an upper electrode 20g, a dielectric layer 30g, a first external electrode 61g, and a second external electrode 62g.

An electrode buried space 8g is formed on the substrate 2g. A region where the electrode buried space 8g is formed may be divided into a plurality of unit cell areas.

A structure of the substrate 2g and a structure in which the region where the electrode buried space 8g is formed may be divided into a plurality of unit cell areas are the same or similar to the structures described above in FIGS. 1 to 4, so repeated descriptions will be omitted.

The capacitor 1g according to another embodiments includes a plurality of unit capacitor cells UCgs. The unit capacitor cells UCgs are respectively disposed on the unit cell areas. That is, one unit capacitor cell UCg is disposed on one unit cell area. Each unit capacitor cell UCg includes a lower electrode 10g, an upper electrode 20g, and a dielectric layer 30g disposed on a unit cell area.

A structure of the lower electrode 10g, the upper electrode 20g, the dielectric layer 30g, and the insulating layer 50g may be the same as or similar to the structure of the lower electrode 10d, the upper electrode 20d, the dielectric layer 30d, and the insulating layer 50d of the capacitor 1d described above in FIGS. 9 and 10, and thus repeated descriptions will be omitted.

The upper electrode 20g and lower electrode 10g disposed in adjacent two unit cell areas may be connected by an internal connection layer 40g. The internal connection layer 40g may include a first internal connection layer 41g, a second internal connection layer 42g, and a third internal connection layer 43g. A structure of the internal connection layer 40g may be the same as or similar to the structure of the internal connection layer 40d of the capacitor 1d described above in FIGS. 9 and 10, repeated descriptions will be omitted.

The first external electrode 61g may be connected to the lower electrode 10g on the unit cell area disposed at a first end of the longitudinal direction L. The first external electrode 61g may be connected to the lower electrode 10g by a first external connection layer 46g.

The second external electrode 62g may be disposed to be spaced apart from the first external electrode 61g along the longitudinal direction L. The second external electrode 62g may be connected to the upper electrode 20g on the unit cell area disposed at a second end of the longitudinal direction L. The second external electrode 62g may be connected to the lower electrode 10g by a second external connection layer 47g.

A connection structure of the first external electrode 61g, the first external connection layer 46g, the second external electrode 62g, and the second external connection layer 47g may be the same as or similar to that of the first external electrode 61, the first external connection layer 46, the second external electrode 62, and the second external connection layer 47 described above in FIGS. 1 to 4, and thus repeated descriptions will be omitted.

The external electrodes 61g and 62g may be the same as or similar to the external electrode 60 described above in FIG. 5 or the external electrode 60a described above in FIG. 6, and repeated descriptions will be omitted.

The capacitor 1g according to another embodiments has a structure in which the lower electrode 10g included in one unit capacitor cell UCg (i.e., first unit capacitor cell) of two unit capacitor cells UCg adjacent to each other along the unit cell connection direction and the upper electrode 20g included in another unit capacitor cell UCg (i.e., second unit capacitor cell) are connected through the internal connection layer 40g, and a plurality of unit capacitor cells UCg are connected to each other. The lower exposed portion 110g may be disposed in one of two unit capacitor cells UCg adjacent to each other along the unit cell connection direction. In this case, the lower exposed portion 110g may be disposed to face a first side of the unit cell connection direction. Accordingly, two unit capacitor cells UCg adjacent to each other along the unit cell connection direction may be connected to each other through the lower exposed portion 110g, the internal connection layer 40g, and the upper electrode 20g. That is, a plurality of unit capacitor cells UCg are connected to each other in series along the unit cell connection direction. Additionally, the first external electrode 61g may be connected to the lower electrode 10g of the unit capacitor cell UCg disposed at a first end of the longitudinal direction L. In addition, the second external electrode 62g may be connected to the upper electrode 20g of the unit capacitor cell UCg disposed at a second end of the longitudinal direction L. The lower electrode 10g connected to the first external electrode 61g becomes a first internal electrode. The upper electrode 20g connected to the second external electrode 62g becomes a second internal electrode. In addition, the upper electrode 20g and the lower electrode 10g, which are disposed between the first internal electrode and the second internal electrode and connected to the internal connection layer 40g, become floating electrodes.

Additionally, similar to what is described above in FIG. 7, the first external electrode 61g may be connected to the lower electrode 10g of the unit capacitor cell UCg disposed at a first end of the longitudinal direction L. In addition, the second external electrode 62g may be connected to the lower electrode 10g of the unit capacitor cell UCg disposed at a second end of the longitudinal direction L. The lower electrode 10g connected to the first external electrode 61g becomes a first internal electrode. The lower electrode 10g connected to the second external electrode 62g and the upper electrode 20g connected thereto become second internal electrodes. In addition, the upper electrode 20g and the lower electrode 10g, which are disposed between the first internal electrode and the second internal electrode and connected to the internal connection layer 40g, become floating electrodes. To this end, the lower electrode 10g of the unit capacitor cell UCg disposed at a second end of the longitudinal direction L may have lower exposed portions 110g disposed at opposite sides. Accordingly, a first one of the two lower exposed portions 110g may face an adjacent unit cell area, and a second one may face an end of the substrate 2g along the longitudinal direction L.

Additionally, similar to what is described above in FIG. 8, the first external electrode 61g may be connected to the upper electrode 20g of the unit capacitor cell UCg disposed at a first end of the longitudinal direction L. In addition, the second external electrode 62g may be connected to the upper electrode 20g of the unit capacitor cell UCg disposed at a second end of the longitudinal direction L. The upper electrode 20g connected to the first external electrode 61g and the lower electrode 10g connected thereto become first internal electrodes. The upper electrode 20g connected to the second external electrode 62g becomes a second internal electrode. In addition, the upper electrode 20g and the lower electrode 10g, which are disposed between the first internal electrode and the second internal electrode and connected to the internal connection layer 40g, become floating electrodes.

In this case, the unit capacitor cell UCg disposed at a first end of the longitudinal direction L and including the lower electrode 10g or the upper electrode 30g to which the first external electrode 61g is connected may be referred to as a first connection capacitor cell. In addition, the unit capacitor cell UCg disposed at a second end of the longitudinal direction L and including the lower electrode 10g or the upper electrode 30g to which the second external electrode 61g is connected may be referred to as a second connection capacitor cell.

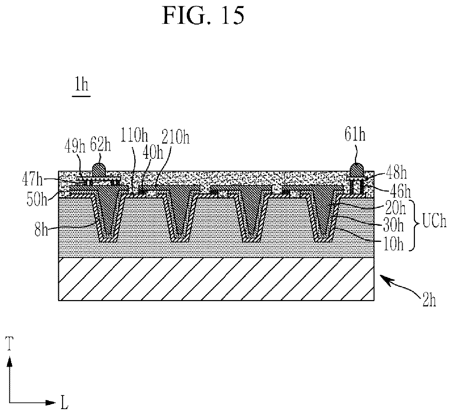

FIG. 15 illustrates a capacitor 1h according to another embodiments.

Referring to FIG. 15, the capacitor 1h according to another embodiment may include a substrate 2h, a lower electrode 10h, an upper electrode 20h, a dielectric layer 30h, a first external electrode 61h, and a second external electrode 62h.

An electrode buried space 8h is formed on the substrate 2h. A region where the electrode buried space 8h is formed may be divided into a plurality of unit cell areas.

A structure of the substrate 2h and a structure in which the region where the electrode buried space 8h is formed may be divided into a plurality of unit cell areas may be the same or similar to the structures described above in FIGS. 1 to 4, so repeated descriptions will be omitted.

The capacitor 1h according to another embodiments includes a plurality of unit capacitor cells UChs. The unit capacitor cells UChs are respectively disposed on the unit cell areas. That is, one unit capacitor cell UCh is disposed on one unit cell area. Each unit capacitor cell UCh includes a lower electrode 10h, an upper electrode 20h, and a dielectric layer 30h disposed on a unit cell area.

A structure of the lower electrode 10h, the upper electrode 20h, the dielectric layer 30h, and the insulating layer 50h may be the same as or similar to the structure of the lower electrode 10, the upper electrode 20, the dielectric layer 30, and the insulating layer 50 of the capacitor 1 described above in FIGS. 1 and 4, and thus repeated descriptions will be omitted.

The upper electrode 20h and lower electrode 10h respectively disposed in adjacent two unit cell areas may be connected through an internal connection layer 40h. A structure of the internal connection layer 40h is the same as or similar to the structure of the internal connection layer 40 of the capacitor 1 described above in FIGS. 1 and 4, repeated descriptions will be omitted.

The first external electrode 61h is connected to the lower electrode 10h on the unit cell area disposed at a first end of the longitudinal direction L. The first external electrode 61h is connected to the lower electrode 10h by a first external connection layer 46h. A first pad portion 48h may be disposed between the first external connection layer 46h and the first external electrode 61h.

The second external electrode 62h may be disposed to be spaced apart from the first external electrode 61h along the longitudinal direction L. The second external electrode 62h is connected to the upper electrode 20h on the unit cell area disposed at a second end of the longitudinal direction L. The second external electrode 62h is connected to the lower electrode 10h by a second external connection layer 47h. A first pad portion 49h may be disposed between the first external connection layer 46h and the second external electrode 61h.

A connection structure of the first external electrode 61h, the first external connection layer 46h, the second external electrode 62h, the second external connection layer 47h, the first pad portion 48h, and the second pad portion 49h is the same as or similar to that of the first external electrode 61d, the first external connection layer 46d, the second external electrode 62d, the second external connection layer 47d, the first pad portion 48d, and the second pad portion 49d described above in FIGS. 9 and 10, and thus repeated descriptions will be omitted.

Additionally, identical to or similar to the first pad portion 48f and the second pad portion 49f described above in FIG. 13, at least some portions of the first pad portion 48h and the second pad portion 49h may be disposed in a region facing the internal connection layer 40h in the thickness direction T. Additionally, the first external electrode 61h and the second external electrode 62h may be provided in plural numbers and arranged to be spaced apart in the width direction W and the longitudinal direction L.

The external electrodes 61h and 62h are the same as or similar to the external electrode 60 described above in FIG. 5 or the external electrode 60a described above in FIG. 6, and repeated descriptions will be omitted.

The capacitor 1h according to another embodiment has a structure in which the lower electrode 10h included in one unit capacitor cell UCh (i.e., first unit capacitor cell) of two unit capacitor cells UCh adjacent to each other along the unit cell connection direction and the upper electrode 20h included in another unit capacitor cell UCh (i.e., second unit capacitor cell) are connected through the internal connection layer 40h, and a plurality of unit capacitor cells UCh are connected to each other. The lower exposed portion 110h may be disposed in a first one of the two unit capacitor cells UCh adjacent to each other along the unit cell connection direction, and the upper protrusion 210h may be disposed in a second unit capacitor cell UCc. In this case, the lower exposed portion 110h may be disposed to face a first side of the unit cell connection direction, and the upper protrusion 210h may be disposed to face a second side of the unit cell connection direction. Accordingly, two unit capacitor cells UCh adjacent to each other along the unit cell connection direction may be connected to each other through the lower exposed portion 110h, the upper protrusion 210h, and the internal connection layer 40h. That is, a plurality of unit capacitor cells UCh are connected to each other in series along the unit cell connection direction. Additionally, the first external electrode 61h may be connected to the lower electrode 10h of the unit capacitor cell UCh disposed at a first end of the longitudinal direction L. In addition, the second external electrode 62h may be connected to the upper electrode 20h of the unit capacitor cell UCh disposed at a second end of the longitudinal direction L. The lower electrode 10h connected to the first external electrode 61h becomes a first internal electrode. The upper electrode 20h connected to the second external electrode 62h becomes a second internal electrode. In addition, the upper electrode 20h and the lower electrode 10h, which are disposed between the first internal electrode and the second internal electrode and connected to the internal connection layer 40h, become floating electrodes.

Additionally, similar to what was described above in FIG. 7, the first external electrode 61h may be connected to the lower electrode 10h of the unit capacitor cell UCh disposed at a first end of the longitudinal direction L. In addition, the second external electrode 62h may be connected to the lower electrode 10h of the unit capacitor cell UCh disposed at a second end of the longitudinal direction L. The lower electrode 10h connected to the first external electrode 61h becomes a first internal electrode. The lower electrode 10h connected to the second external electrode 62h and the upper electrode 20h connected thereto become second internal electrodes. In addition, the upper electrode 20h and the lower electrode 10h, which are disposed between the first internal electrode and the second internal electrode and connected to the internal connection layer 40h, become floating electrodes. To this end, the lower electrode 10h of the unit capacitor cell UCh disposed at a second end of the longitudinal direction L may have lower exposed portions 110h disposed at opposite sides. Accordingly, a first one of the two lower exposed portions 110h may face an adjacent unit cell area, and a second one may face an end of the substrate 2h along the longitudinal direction L.

Additionally, similar to what was described above in FIG. 8, the first external electrode 61h may be connected to the upper electrode 20h of the unit capacitor cell UCh disposed at a first end of the longitudinal direction L. In addition, the second external electrode 62h may be connected to the upper electrode 20h of the unit capacitor cell UCh disposed at a second end of the longitudinal direction L. The upper electrode 20h connected to the first external electrode 61h and the lower electrode 10h connected thereto become first internal electrodes. The upper electrode 20h connected to the second external electrode 62h becomes a second internal electrode. In addition, the upper electrode 20h and the lower electrode 10h, which are disposed between the first internal electrode and the second internal electrode and connected to the internal connection layer 40h, become floating electrodes.

In this case, the unit capacitor cell UCh disposed at a first end of the longitudinal direction L and including the lower electrode 10h or the upper electrode 30h to which the first external electrode 61h is connected may be referred to as a first connection capacitor cell. In addition, the unit capacitor cell UCh disposed at a second end of the longitudinal direction L and including the lower electrode 10h or the upper electrode 30h to which the second external electrode 61h is connected may be referred to as a second connection capacitor cell.

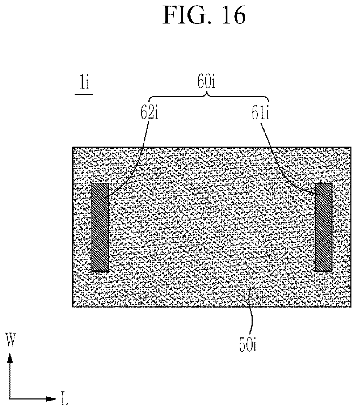

FIG. 16 illustrates a top plan view of a capacitor 1i according to another embodiment.

Referring to FIG. 16, the external electrode 60i may have a plate-shaped structure. The external electrode 60i may include a first external electrode 61i and a second external electrode 62i. The first external electrode 61i may be disposed to be at least partially exposed to the outside of the insulating layer 50i on the first surface of the substrate. The second external electrode 62i may be disposed to be at least partially exposed to the outside of the insulating layer 50i on the first surface of the substrate.

The structure of the capacitor 1i except for the external electrode 60i is the same as or similar to one of the capacitor 1 described above in FIG. 1 to FIG. 4, the capacitor 1b described above in FIG. 7, the capacitor 1c described above in FIG. 8, the capacitor 1d described above in FIGS. 9 and 10, the capacitor 1e described above in FIGS. 11 and 12, the capacitor 1f described above in FIG. 13, the capacitor 1g described above in FIG. 14, and the capacitor 1h described above in FIG. 15, and repeated descriptions will be omitted.

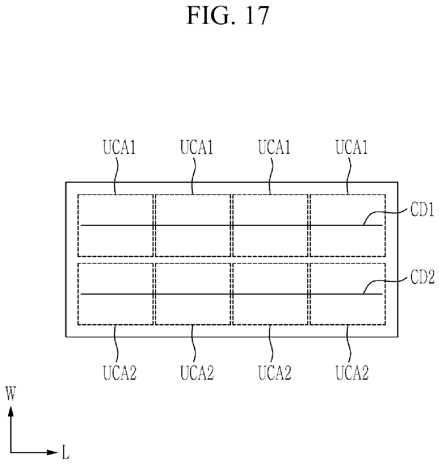

FIG. 17 illustrates a disposition structure of unit cell areas UCA1 and UCA2 according to another embodiment.

Referring to FIG. 17, at least two unit cell areas UCA1 and UCA2 may be arranged along the longitudinal direction L. Additionally, at least two unit cell areas UCA1 and UCA2 may be arranged along the width direction W. Additionally, there may be multiple unit cell connection directions CD1 and CD2. Additionally, one unit cell connection direction (CD1, CD2) may pass through each unit cell area (UCA1, UCA2). Unit capacitor cells disposed on the unit cell areas UCA1 and UCA2 are connected to each other along the unit cell connection directions CD1 and CD2. Accordingly, the regions connected according to each of the unit cell connection directions CD1 and CD2 have an parallel structure. As an example, the unit cell areas UCA1 and UCA2 may include a first unit cell area UCA1 and a second unit cell area UCA2. The first unit cell area UCA1 and the second unit cell area UCA2 may be arranged along the width direction W. Additionally, the unit cell connection directions CD1 and CD2 may include a first unit cell connection direction CD1 and a second unit cell connection direction CD1. The first unit cell connection direction CD1 extends through a plurality of first unit cell areas UCA1. That is, the first unit cell connection direction CD1 extends through each of the first unit cell areas UCA1 once. The second unit cell connection direction CD2 extends through a plurality of second unit cell areas UCA2. That is, the second unit cell connection direction CD2 extends through each of the first unit cell areas UCA2 once. Additionally, the first unit cell connection direction CD1 and the second unit cell connection direction CD2 do not intersect each other. Accordingly, the unit capacitor cells disposed on the first unit cell area UCA1 and connected to the first unit cell connection direction CD1 and the unit capacitor cells disposed on the second unit cell area UCA2 and connected to the second unit cell connection direction CD2 have a parallel structure.

The structure of the unit capacitor cell, the structure in which the unit capacitor cell is connected, the structure in which the external electrode is connected to the unit capacitor cell, and the structure of the external electrode are the same as or similar to those described above in FIGS. 1 to 16, and repeated descriptions will be omitted.

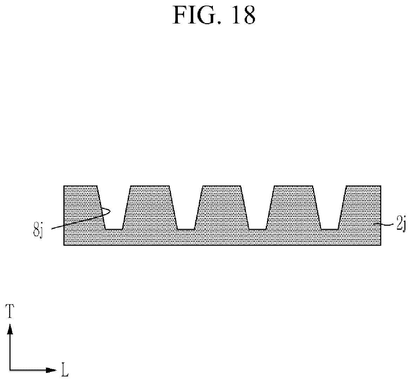

FIG. 18 illustrates a cross-sectional view of a substrate 2j according to another embodiment.

Referring to FIG. 18, an electrode buried space 8j is formed on the substrate 2j. As an example, the electrode buried space 8j may be formed on a silicon wafer through an etching process. Accordingly, first and second surfaces of the substrate 2j may be made of silicon. A structure of the electrode buried space 8j is the same as or similar to the electrode buried space 8 of the substrate 2 described above in FIGS. 1 to 4, and repeated descriptions will be omitted.

The structures described above in FIGS. 1 to 17 may be disposed on the substrate 2j.

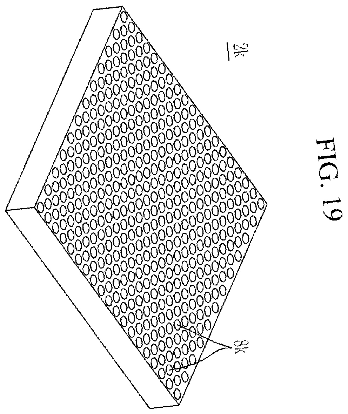

FIG. 19 illustrates a substrate 2k according to another embodiment.

Referring to FIG. 19, the substrate 2k may be provided as an insulating material. A plurality of electrode buried spaces 8k may be formed on a first surface of the substrate 2k. The electrode buried space 8k may be a column-shaped space extending from the first surface toward a second surface. According to some embodiments of the present disclosure, the substrate 2k may be made of porous anodizing aluminum oxide (AA0), and the electrode buried space 8k may be formed by micropores formed in the anodizing aluminum oxide. An aspect ratio of the micropores may be 2000 to 3000. The substrate 2k may have a structure in which a bottom of the micropores are blocked.

The structures described above in FIGS. 1 to 17 may be disposed on the substrate 2k.

While this disclosure has been described in connection with what is presently considered to be practical embodiments, it is to be understood that the disclosure is not limited to the disclosed embodiments, but, on the contrary, is intended to cover various modifications and equivalent dispositions included within the spirit and scope of the appended claims.

### <Description of Symbols>

2: substrate
5: support layer
6: substrate insulating layer
8: electrode buried space
10: lower electrode
20: upper electrode
30: dielectric layer
40: internal connection layer
46: first external connection layer
47: second external connection layer
50: insulating layer
61: first external electrode
62: second external electrode
110: lower exposed portion
210: upper protrusion

## Claims

1. A capacitor comprising:
a substrate; and
a plurality of unit capacitor cells disposed on the substrate,
wherein each of the plurality of unit capacitor cells includes:
a lower electrode; and
an upper electrode disposed on the lower electrode, and
the lower electrode included in a first unit capacitor cell among the plurality of unit capacitor cells is connected to the upper electrode included in a second unit capacitor cell among the plurality of unit capacitor cells.

2. The capacitor of claim 1, further comprising:
a first external electrode; and
a second external electrode disposed spaced apart in a longitudinal direction from the first external electrode,
wherein the first external electrode is connected to the lower electrode included in a first connection capacitor cell disposed at a first end of the longitudinal direction among the plurality of unit capacitor cells, and
the second external electrode is connected to the upper electrode included in a second connection capacitor cell disposed at a second end of the longitudinal direction among the plurality of unit capacitor cells.

3. The capacitor of one of claims 1 or 2, further comprising:
a first external connection layer connecting the first external electrode and the lower electrode included in the first connection capacitor cell; and
a second external connection layer connecting the second external electrode and the upper electrode included in the second connection capacitor cell.

4. The capacitor of one of claims 1 to 3, further comprising:
a first pad portion disposed between the first external connection layer and the first external electrode; and
a second pad portion disposed between the second external connection layer and the second external electrode.

5. The capacitor of one of claims 1 to 4, wherein
the first external electrode and the second external electrode have a bump structure.

6. The capacitor of one of claims 1 to 5, wherein the capacitor comprises
a plurality of first external electrodes and a plurality of second external electrodes.

7. The capacitor of one of claims 1 to 6, further comprising:
a first external electrode; and
a second external electrode disposed spaced apart in a longitudinal direction from the first external electrode,
wherein the first external electrode is connected to the lower electrode included in a first connection capacitor cell disposed at a first end of a longitudinal direction among the plurality of unit capacitor cells, and
the second external electrode is connected to the lower electrode included in a second connection capacitor cell disposed at a second end of the longitudinal direction among the plurality of unit capacitor cells, and/or further comprising:
a first external electrode; and
a second external electrode disposed spaced apart in a longitudinal direction from the first external electrode,
wherein the first external electrode is connected to the upper electrode included in a first connection capacitor cell disposed at a first end of a longitudinal direction among the plurality of unit capacitor cells, and
the second external electrode is connected to the upper electrode included in a second connection capacitor cell disposed at a second end of the longitudinal direction among the plurality of unit capacitor cells, and/or further comprising
an internal connection layer configured to have a via structure and to connect the lower electrode included in the first unit capacitor cell and the upper electrode included in the second unit capacitor cell.

8. The capacitor of one of claims 1 to 7, wherein
the lower electrode included in the first unit capacitor cell includes a lower exposed portion without the upper electrode at an upper side, and the upper electrode included in the second unit capacitor cell includes an upper protrusion protruding toward the lower exposed portion, and
the internal connection layer is disposed between the lower exposed portion and the upper protrusion, and/or wherein
the internal connection layer includes:
a first internal connection layer connected to the lower electrode;
a second internal connection layer connected to the upper electrode; and
a third internal connection layer connecting the first internal connection layer and the second internal connection layer.

9. The capacitor of one of claims 1 to 8, wherein
the third internal connection layer has a plate-shaped structure.

10. A capacitor comprising:
a substrate; and
a plurality of unit capacitor cells disposed on the substrate,
wherein each of the plurality of unit capacitor cells includes:
a lower electrode; and
an upper electrode disposed on the lower electrode,
wherein the lower electrodes included in each of the plurality of unit capacitor cells are separated from each other,
the upper electrodes included in each of the plurality of unit capacitor cells are separated from each other, and
the plurality of unit capacitor cells are connected to each other in series.

11. The capacitor of claim 10, wherein
a plurality of electrode buried spaces having a groove structure are formed in the substrate, and
a region where the electrode buried spaces are formed is divided into a plurality of unit cell areas, and one of the plurality of unit capacitor cells is disposed on one of the unit cell areas.

12. The capacitor of one of claims 10 or 11, wherein
the plurality of unit capacitor cells are connected along a unit cell connection direction that passes through each of the unit cell areas once.

13. The capacitor of one of claims 10 to 12, wherein
each of the unit cells areas includes:
a plurality of first unit cell areas; and
a plurality of second unit cell areas,
the plurality of unit capacitor cells disposed on the first unit cell areas are connected along a first unit cell connection direction passing through the first unit cell areas, and
the plurality of unit capacitor cells disposed on the second unit cell areas are connected along a second unit cell connection direction passing through the second unit cell areas.

14. A capacitor comprising:
a substrate; and
a plurality of unit capacitor cells disposed on the substrate,
wherein each of the plurality of unit capacitor cells includes:
a lower electrode; and
an upper electrode disposed on the lower electrode,
the lower electrode incudes a part on which the upper electrode is not disposed,
the upper electrode includes a part on which the lower electrode is not disposed,
two adjacent of the plurality of unit capacitor cells are connected with each other through the part of the lower electrode on which the upper electrode is not disposed and the part of the upper electrode disposed on which the lower electrode is not disposed.

15. The capacitor of claim 14, further comprising:
a first external electrode; and
a second external electrode disposed spaced apart in a longitudinal direction from the first external electrode,
wherein the first external electrode is connected to the lower electrode through the part of the lower electrode on which the upper electrode is not disposed, and
the second external electrode is connected to the upper electrode through the part of the upper electrode on which the lower electrode is not disposed, and/or further comprising:
a first external connection layer connecting the first external electrode and the part of the lower electrode on which the upper electrode is not disposed; and
a second external connection layer connecting the second external electrode and the part of the upper electrode on which the lower electrode is not disposed, and/or
further comprising:
a first pad portion disposed between the first external connection layer and the first external electrode; and
a second pad portion disposed between the second external connection layer and the second external electrode.
